(19) **Europäisches Patentamt European Patent Office Office européen des brevets**

(11) **EP 4 126 765 B1**

(12) **EUROPEAN PATENT SPECIFICATION**

(45) Date of publication and mention of the grant of the patent:
**22.11.2023 Bulletin 2023/47**

(21) Application number: **21714891.5**

(22) Date of filing: **29.03.2021**

(51) International Patent Classification (IPC):
*C01F 17/36* (2020.01)     *C01G 15/00* (2006.01)
*H01B 1/06* (2006.01)     *H01M 10/0562* (2010.01)

(52) Cooperative Patent Classification (CPC):
**C01F 17/36; C01G 15/006; H01B 1/06; H01M 4/131; H01M 4/382; H01M 4/405; H01M 4/505; H01M 4/525; H01M 4/62; H01M 10/052; H01M 10/0562; H01M 50/434;**
C01P 2002/32; C01P 2002/72; C01P 2002/76;

(Cont.)

(86) International application number:
**PCT/EP2021/058167**

(87) International publication number:
**WO 2021/198183 (07.10.2021 Gazette 2021/40)**

(54) **SOLID ELECTROLYTE FOR ENERGY STORAGE APPLICATION**

**FESTELEKTROLYT FÜR ENERGIESPEICHERANWENDUNGEN**

**ÉLECTROLYTE SOLIDE POUR APPLICATION DE STOCKAGE D'ÉNERGIE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2020 EP 20166835**
**17.04.2020 EP 20170190**

(43) Date of publication of application:
**08.02.2023 Bulletin 2023/06**

(73) Proprietors:
• **BASF SE**
**67056 Ludwigshafen am Rhein (DE)**
• **University of Waterloo**
**Waterloo N2L 3G1 (CA)**

(72) Inventors:
• **ZHOU, Laidong**
**Waterloo, Ontario N2L 3G1 (CA)**
• **NAZAR, Linda**
**Waterloo, Ontario N2L 3G1 (CA)**
• **WU, Xiaohan**
**67056 Ludwigshafen (DE)**

(74) Representative: **Eisenführ Speiser**
**Patentanwälte Rechtsanwälte PartGmbB**
**Am Kaffee-Quartier 3**
**28217 Bremen (DE)**

(56) References cited:
**EP-A1- 1 049 183     US-A1- 2019 088 995**

• **LAIDONG ZHOU ET AL: "A new halospinel superionic conductor for high-voltage all solid state lithium batteries", ENERGY & ENVIRONMENTAL SCIENCE, vol. 13, no. 7, 15 July 2020 (2020-07-15), pages 2056-2063, XP055734493, Cambridge ISSN: 1754-5692, DOI: 10.1039/D0EE01017K**

(52) Cooperative Patent Classification (CPC): (Cont.)
C01P 2002/85; C01P 2004/03; H01M 2004/028;
H01M 2300/0068; H01M 2300/008; Y02E 60/10

**Description**

Described are a solid material which has ionic conductivity for lithium ions, a process for preparing said solid material, a use of said solid material as a solid electrolyte for an electrochemical cell, a solid structure selected from the group consisting of a cathode, an anode and a separator for an electrochemical cell comprising the solid material, and an electro-chemical cell comprising such solid structure.

Due to the wide-spread use of all-solid-state lithium batteries, there is an increasing demand for solid state electrolytes having a high conductivity for lithium ions. An important class of such solid electrolytes are lithium transition metal halides. Such solid electrolytes are disclosed e.g. in US 2019/0088995 A1, WO 2019/135343 A1 and WO 2019/135345 A1.

Related art is also EP 1 049 183 A1 and US 2019/088995 A1

There is an ongoing need for lithium ion conductors which exhibit suitable ionic conductivity for application as solid electrolyte in an all-solid-state lithium battery, as well as electro-chemical oxidative stability up to 4 V vs. $Li/Li^+$ or more, preferably up to 4.5 V vs. $Li/Li^+$, in order to enable application of cathode active materials having a redox potential of 4 V or more vs. $Li/Li^+$ (cathode active material of the "4 V class"), so that a high cell voltage is obtainable.

The publication "Site-Occupation-Tuned Superionic LixScCl3+x Halide Solid Electrolytes for All-Solid-State Batteries" by Liang et al., (J. Am. Chem. Soc., DOI: 10.1021/jacs.0c00134, Publication Date (Web): 26 Mar 2020) discloses solid electrolytes $Li_xScCl_{3+x}$ (x = 1, 1.5, 2, 2.5, 3, 3.5, and 4) based on the cubic close-packed anion sublattice. When x ≥ 2.5, the XRD patterns can be indexed well with $Li_3ScCl_6$, (C2/m, ICSD No. 04-009-8885) which is a monoclinic structure. According to said publication, due to a low eutectic temperature between LiCl and $ScCl_3$, $Li_xScCl_{3+x}$ can be synthesized by a simple co-melting strategy. Further details of the material synthesis are not given.

In April 2020, a "Supporting Information" related to the above-mentioned paper was published online which provides complete experimental details, electrochemical/interface stability calculation, ab initio molecular dynamics simulations, supplementary figures and tables.

It is an objective of the present disclosure to provide a solid material which may be used as a solid electrolyte for an electrochemical cell. In addition, there is provided a process for preparing said solid material, a use of said solid material as a solid electrolyte for an electrochemical cell, a solid structure selected from the group consisting of a cathode, an anode and a separator for an electrochemical cell comprising the solid material, and an electro-chemical cell comprising such solid structure, wherein said solid structure comprises said solid material.

According to a first aspect, there is provided a solid material having a composition according to general formula (I)

$$Li_aAX_4 \qquad (I)$$

wherein
X is one or more selected from the group consisting of Cl, F, Br and I

(a) A is $M1_bM2_c$
wherein
M1 is a first trivalent metal and M2 is a second trivalent metal different from M1,

$$0.1 \leq b \leq 0.8,$$

$$0 \leq c \leq 0.7,$$

$$0.6 \leq (b+c) \leq 0.8$$

$$a = 4 - 3(b+c)$$

(b) A is $M1_dM3_e$
wherein
M1 is a trivalent metal and M3 is a divalent metal,

$$0.3 \leq d \leq 0.8,$$

$$0.2 \leq e \leq 0.7,$$

$$0.9 \leq (d+e) \leq 1.1,$$

$$a = 4 - 3d - 2e.$$

As used herein "tri-valent" means that in the solid material according to general formula (I) the metals M1 and -if present- M2 are in the oxidation state +3, and "di-valent" means that in the solid material according to general formula (I) the metal M3 is in the oxidation state +2.

In formula (I), X is either one selected from the group consisting of Cl, F, Br and I, or X is more than one selected from the group consisting of Cl, F, Br and I so that the sum of all X is 4. Preferably X is one selected from the group consisting of Cl, F, Br and I, preferably Cl.

When A is M1$_b$M2$_c$ as defined above, M1 is a first trivalent metal and M2 is a second trivalent metal different from M1, or M1 is a trivalent metal, and M2 is not present. M1 and -if present- M2 may be selected from the group consisting of Sb, Nb and Mo (antimony, niobium and molybdenum, in each case in the oxidation state +3), and Sc, Al, In and Y (scandium, aluminium, indium and yttrium). Preferably, M1 and M2 are different trivalent metals selected from the group consisting of Sc, Al, In and Y, or M1 is a trivalent metal selected from the group consisting of Sc, Al, In and Y, and M2 is not present.

When A is M1$_b$M2$_c$ as defined above, the following definitions apply to formula (I) as defined above

$$0.1 \leq b \leq 0.8,$$

preferably 0.1 to 0.7

$$0 \leq c \leq 0.7$$

$$0.6 \leq (b+c) \leq 0.8,$$

preferably 0.6 to 0.75, more preferably 0.65 to 0.7

$$a = 4 - 3(b+c)$$

When A is M1$_d$M3$_e$ as defined above, M1 is a trivalent metal and M3 is a divalent metal. M1 may be selected from the group consisting of Sb, Nb and Mo (antimony, niobium and molybdenum, in each case in the oxidation state +3), and Sc, Al, In and Y (scandium, aluminium, indium and yttrium). M3 may be selected from the group consisting of Mg, Ca, and Zn (magnesium, calcium and zinc). Preferably M1 is selected from the group consisting of Sc, Al, In and Y, and M3 is selected from the group consisting of Mg, Ca and Zn.

When A is M1$_d$M3$_e$ as defined above, the following definitions apply to formula (I) as defined above

$$0.3 \leq d \leq 0.8,$$

preferably $0.4 \leq d \leq 0.8$, more preferably $0.46 \leq d \leq 0.78$, and

$$0.2 \leq e \leq 0.7,$$

preferably $0.2 \leq e \leq 0.55$, more preferably $0.22 \leq e \leq 0.52$

$$0.9 \leq (d+e) \leq 1.1,$$

preferably $0.95 \leq (d+e) \leq$ to $1.05$, more preferably $0.98 \leq (d+e) \leq 1.02$.

$$a = 4 - 3d - 2e.$$

Irrespective of the selection of A, X is preferably Cl.

When A is $M1_bM2_c$ as defined above, a solid material according to the first aspect described herein has a composition according to formula (Ia)

$$Li_aM1_bM2_cX_4 \qquad (Ia)$$

wherein

$$0.6 \leq b \leq 0.8$$

$$0 \leq c \leq 0.7$$

$$a = 4\text{-}3b,$$

M1 is a first trivalent metal, M2 - if present - is a second trivalent metal different from M1, and X is selected from the group consisting of Cl, F, Br and I.

In certain cases, a solid material according to the first aspect as disclosed herein has a composition according to formula (Ia)

$$Li_aM1_bM2_cX_4 \qquad (Ia)$$

wherein

$$0.6 \leq b \leq 0.8;$$

$$c = 0;$$

$$a = 4\text{-}3b,$$

M1 is a first trivalent metal, M2 is not present, and X is selected from the group consisting of Cl, F, Br and I.

Thus formula (Ia) may be rewritten as formula (Ia')

$$Li_aM1_bX_4 \qquad (Ia')$$

wherein M1, X, a and b are as defined above.

M1 may be selected from the group consisting of Sb, Nb and Mo (antimony, niobium and molybdenum, in each case in the oxidation state +3), and Sc, Al, In and Y (scandium, aluminium, indium and yttrium in each case in the oxidation state +3). Preferably, M1 is a trivalent metal selected from the group consisting of Sc, Al, In and Y.

Preferably, X is Cl.

Further preferably, M1 is a trivalent metal selected from the group consisting of Sc, Al, In and Y, and X is Cl. For instance, M1 is Sc and X is Cl, or M1 is In and X is Cl.

Preferably, $0.6 \leq b \leq 0.75$, more preferably, $0.65 \leq b \leq 0.7$.

Further preferably, $0.65 \leq b \leq 0.7$, M1 is a trivalent metal selected from the group consisting of Sc, Al, In and Y, and X is Cl. Still further preferably, $0.65 \leq b \leq 0.7$, M is Sc and X is Cl.

Exemplary solid materials having a composition according to formula (Ia) wherein c = 0 (i.e. solid materials having a composition according to formula (Ia')) are:

$$Li_{2.08}Sc_{0.64}Cl_4$$

$$Li_2Sc_{2/3}Cl_4$$

$$Li_{1.9}Sc_{0.7}Cl_4$$

$$Li_2In_{2/3}Cl_4.$$

In certain other cases a solid material according to the first aspect as disclosed herein has a has a composition according to formula (Ia)

$$Li_aM1_bM2_cX_4 \qquad (Ia)$$

wherein

$$0.1 \leq b \leq 0.7;$$

$$0.1 \leq c \leq 0.7;$$

$$0.6 \leq (b+c) \leq 0.8;$$

$$a = 4-3b,$$

M1 is a first trivalent metal, M2 is a second trivalent metal different from M1, and X is selected from the group consisting of Cl, F, Br and I.
M1 and M2 may be selected from the group consisting of Sb, Nb and Mo (antimony, niobium and molybdenum, in each case in the oxidation state +3), and Sc, Al, In and Y (scandium, aluminium, indium and yttrium). Preferably, M1 and M2 are different trivalent metals selected from the group consisting of Sc, Al, In and Y.
Preferably, X is Cl.
Further preferably, M1 and M2 are different trivalent metals selected from the group consisting of Sc, Al, In and Y, and X is Cl. For instance, M1 is Sc, M2 is In and X is Cl.
Preferably

$$0.1 \leq b \leq 0.6,$$

more preferably $0.1 \leq b \leq 0.58$, and

$$0.1 \leq c \leq 0.6,$$

and

$$0.6 \leq (b+c) \leq 0.75,$$

more preferably $0.65 \leq (b+c) \leq 0.7$.
For instance, M1 is Sc, M2 is In, X is Cl, $0.1 \leq b \leq 0.6$, $0.1 \leq c \leq 0.6$, and $0.6 \leq (b+c) \leq 0.75$.
For instance, M1 is Sc, M2 is In, X is Cl, $0.1 \leq b \leq 0.58$, $0.1 \leq c \leq 0.58$, and $0.65 \leq (b+c) \leq 0.7$.
Exemplary solid materials having a composition according to formula (Ia) wherein $0.1 \leq c \leq 0.7$ are

$Li_2In_{0.555}Sc_{0.111}Cl_4$ ($Li_2In_{5/9}Sc_{1/9}Cl_4$)

$Li_2In_{0.444}Sc_{0.222}Cl_4$ ($Li_2In_{4/9}Sc_{2/9}Cl_4$)

$Li_2In_{0.333}Sc_{0.333}Cl_4$ ($Li_2In_{1/3}Sc_{1/3}Cl_4$)

$Li_2In_{0.222}Sc_{0.444}Cl_4$ ($Li_2In_{2/9}Sc_{4/9}Cl_4$)

$Li_2In_{0.111}Sc_{0.555}Cl_4$ ($Li_2In_{1/9}Sc_{5/9}Cl_4$).

In yet other cases a solid material according to the first aspect as defined herein has a composition according to formula (I) as defined above, wherein A is $M1_dM3_e$ as defined above. Thus, the solid material has a composition according to formula (Ib)

$$Li_aM1_dM3_eX_4 \qquad (Ib)$$

wherein

$$0.3 \le d \le 0.8,$$

$$0.2 \le e \le 0.7,$$

$$0.9 \le (d+e) \le 1.1,$$

$$a = 4 - 3d - 2e,$$

M1 is a trivalent metal, M3 is a divalent metal, and X is selected from the group consisting of Cl, F, Br and I.
M1 may be selected from the group consisting of Sb, Nb and Mo (antimony, niobium and molybdenum, in each case in the oxidation state +3), and Sc, Al, In and Y (scandium, aluminium, indium and yttrium in each case in the oxidation state +3). Preferably, M1 is a trivalent metal selected from the group consisting of Sc, Al, In and Y.
M3 may be selected from the group consisting of Mg, Ca, and Zn (magnesium, calcium and zinc).
Preferably, X is Cl.
Further preferably, M1 is selected from the group consisting of Sc, Al, In and Y, M3 is selected from the group consisting of Mg, Ca and Zn, and X is Cl. For instance, M1 is Sc, M3 is Mg and X is Cl, or M1 is In, M3 is Mg and X is Cl.
Preferably

$0.35 \le d \le 0.8$, more preferably $0.4 \le d \le 0.8$, further preferably $0.46 \le d \le 0.78$, and

$0.2 \le e \le 0.65$, more preferably $0.2 \le e \le 0.55$, further preferably $0.22 \le e \le 0.52$, and

$0.9 \le (d+e) \le 1.1$, more preferably $0.95 \le (d+e) \le$ to $1.05$, further preferably $0.98 \le (d+e) \le 1.02$.

For instance, M1 is Sc, M3 is Mg and X is Cl, and $0.35 \le d \le 0.8$, $0.2 \le e \le 0.65$ and $0.9 \le (d+e) \le 1.1$.
For instance, M1 is Sc, M3 is Mg and X is Cl, and $0.4 \le d \le 0.8$, $0.2 \le e \le 0.55$ and $0.95 \le (d+e) \le 1.05$.
For instance, M1 is Sc, M3 is Mg and X is Cl, and $0.46 \le d \le 0.78$, $0.2 \le e \le 0.52$ and $0.98 \le (d+e) \le 1.02$.
Exemplary solid materials having a composition according to formula (Ib) are

$Li_{1.65}Mg_{0.65}Sc_{0.35}Cl_4$ ($Li_{165}Sc_{0.35}Mg_{0.65}Cl_4$)

$Li_{1.5}Mg_{0.5}Sc_{0.5}Cl_4$ ($Li_{1.5}Sc_{0.5}Mg_{0.5}Cl_4$)

$Li_{1\cdot35}Mg_{0.35}Sc_{0.65}Cl_4$ ($Li_{1\cdot35}Sc_{0.65}Mg_{0.35}Cl_4$)

$Li_{1.3}Mg_{0.3}Sc_{0.7}Cl_4$ ($Li_{1.3}Sc_{0.7}\,Mg_{0.3}Cl_4$)

$Li_{1.25}Mg_{0.25}Sc_{0.75}Cl_4$ ($Li_{1.25}Sc_{0.75}Mg_{0.25}Cl_4$)

$Li_{1.65}Mg_{0.65}In_{0.35}Cl_4$ ($Li_{1.65}In_{0.35}Mg_{0.65}Cl_4$).

Surprisingly it has been found that solid materials having a composition according to general formula (I) as defined above may exhibit favorable lithium ion conductivity as well as electrochemical oxidation stability in contact with a cathode active material having a redox potential of 4 V or more vs. $Li/Li^+$, and also in contact with electron-conducting materials comprising or consisting of elemental carbon (e.g. carbon black, graphite) which are typical electrode additives in electrochemical cells. This is an important advantage over state-of-the-art solid electrolytes which contain sulfur.

A solid material according to the above-defined first aspect may be crystalline as detectable by the X-ray diffraction technique. A solid material is referred to as crystalline when it exhibits a long range order that is characteristic of a crystal, as indicated by the presence of clearly defined reflections in its X-ray diffraction pattern. In this context, a reflection is considered as clearly defined if its intensity is more than 10% above the background.

A solid material according to the above-defined first aspect may consist of a single phase or of more than one phase, e.g. a main phase (primary phase) and minor amounts of impurities and secondary phases. It is understood that formula (I) is an empirical formula (gross formula) as determinable by means of elemental analysis. Accordingly, formula (I) defines a composition which is averaged over all phases present in the solid material. However, a solid material according to the above-defined first aspect comprises at least one phase which as such has a composition according to formula (I). In case a crystalline solid material according to the above-defined first aspect contains more than one phase, than the weight fraction of phases which as such do not have a composition according to formula (I) (e.g. impurity phases, secondary phases) is so small that the composition averaged over all phases is according to formula (I). The total weight fraction of secondary phases and impurity phases may be 20 % or less, preferably 10 % or less, further preferably 5 % or less, most preferably 3 % or less, based on the total weight of the solid material.

If present, the secondary phases and impurity phases mainly consist of the precursors used for preparing the solid material, e.g. LiX and $MX_3$ (wherein X and M are as defined above), and sometimes impurity phases which may originate from impurities of the precursors. For details of preparing a solid material according to the above defined first aspect, see the information provided below in the context of the second aspect disclosure.

In certain cases, a solid material according to the above-defined first aspect is in the form of a polycrystalline powder, or in the form of single crystals.

A crystalline solid material according to the above-defined first aspect may comprise or consist of a phase having a spinel structure characterized by the cubic space group Fd-3m, wherein said spinel structure exhibits a disordered lithium ion distribution over available tetrahedral and octahedral sites within the lattice.

The phase having said spinel structure may be present in an amount of 80 % or more, preferably 90 % or more, further preferably 95 % or more, most preferably 98 % or more, based on the total weight of the solid material (including secondary phases and impurity phases).

The spinel structure is determined by powder X-ray diffraction (XRD) measurements as generally known in the art. X-ray diffraction (XRD) measurements were conducted at room temperature on a PANalytical Empyrean diffractometer with Cu-$K\alpha$ radiation that was equipped with a PIXcel bidimensional detector. XRD patterns are obtained in Debye-Scherrer geometry, with samples sealed in 0.5 mm (diameter) glass capillaries under argon. XRD patterns for phase identification are obtainable in Bragg-Brentano geometry, with sample placed on a zero-background sample holder in an Ar-filled glovebox and protected by Kapton film.

Without wishing to be bound by any theory, it is presently assumed that the disordered spinel structure provides for a significantly disordered $Li^+$ ion distribution over available tetrahedral and octahedral sites within the lattice so that solid materials having a composition according to general formula (I) may provide favourable conditions for lithium ion conductivity.

Thus, a solid material according to the first aspect described herein may be selected rom the group consisting of

(i) solid materials having a spinel structure characterized by the cubic space group, Fd-3m and a composition according to general formula (Ia)

$$Li_aM1_bM2_cX_4 \qquad (Ia)$$

wherein

$$0.6 \leq b \leq 0.8$$

$$c = 0$$

$$a = 4\text{-}3b.$$

M1 is a trivalent metal selected from the group consisting of Sc, Al, In and Y
(ii) solid materials having a spinel structure characterized by the cubic space group Fd-3m and a composition according to general formula (Ia)

$$Li_aM1_bM2_cX_4 \qquad (Ia)$$

wherein

$$0.1 \leq b \leq 0.7$$

$$0.1 \leq c \leq 0.7$$

$$0.6 \leq (b+c) \leq 0.8$$

$$a = 4\text{-}3(b+c).$$

M1 and M3 are different trivalent metal selected from the group consisting of Sc, Al, In and Y
(iii) solid materials having a spinel structure characterized by the cubic space group Fd-3m and a composition according to general formula (Ib)

$$Li_aM1_dM3_eX_4 \qquad (Ib)$$

wherein

M1 is a trivalent metal selected from the group consisting of Sc, Al, In and Y and
M3 is a divalent metal selected from the group consisting of Mg, Ca and Zn

$$0.3 \leq d \leq 0.8$$

$$0.2 \leq e \leq 0.7$$

$$0.9 \leq (d+e) \leq 1.1$$

$$a = 4 - 3d - 2e.$$

In certain other cases, a solid material according to the above-defined first aspect may have a glassy ceramic structure, i.e. is a polycrystalline solid having at least 30 % by volume of a glassy phase.
The structure of a solid material according to the above-defined first aspect depends on the way how it is prepared. For details of preparing a solid material according to the above defined first aspect, see the information provided below in the context of the second aspect of this disclosure.
A solid material according to the above-defined first aspect may have an ionic conductivity of 0.1 mS/cm or more, preferably 1 mS or more at a temperature of 25 °C. The ionic conductivity is determined in the usual manner known in the field of battery materials development by means of electro-chemical impedance spectroscopy (for details see examples section below).

At the same time, a solid material according to the above-defined first aspect may have an almost negligible electronic conductivity. More specifically the electronic conductivity may be at least 3 orders of magnitude lower than the ionic conductivity, preferably at least 5 orders of magnitude lower than the ionic conductivity. In certain cases, a solid material according to the above-defined first aspect exhibits an electronic conductivity of $10^{-10}$ S/cm or less. The electronic conductivity is determined in the usual manner known in the field of battery materials development by means of direct-current (DC) polarization measurements at different voltages.

Preferred solid materials according to the first aspect as defined above are those having one or more of the specific features disclosed above.

According to a second aspect, there is provided a process for obtaining a solid material according to the above-defined first aspect. Said process comprises the following steps

a) preparing or providing a reaction mixture comprising the precursors

(1) LiX

(2) a compound $M1X_3$ wherein M1 is a trivalent metal
and optionally

(3) a compound selected from the group consisting of compounds $M2X_3$ wherein M2 is a trivalent metal different from M1 and compounds M3Xzwherein M3 is a divalent metal

wherein in each precursor, independently from the other precursors, X is selected from the group consisting of Cl, F, Br, I

wherein in said reaction mixture the molar ratio of the elements Li, M1, X resp. Li, M1, X and one of M2 and M3 matches general formula (I);

b) reacting the reaction mixture so that a solid material having a composition according to general formula (I) is obtained.

In step a) of the process according to the above-defined second aspect, a reaction mixture comprising precursors of the solid material having a composition according to general formula (I) to be formed in step b) is prepared or provided. Said precursors are

(1) LiX

(2) a compound $M1X_3$ wherein M1 is a trivalent metal
and optionally

(3) a compound selected from the group consisting of compounds $M2X_3$ wherein M2 is a trivalent metal different from M1 and compounds $M3X_2$ wherein M3 is a divalent metal

wherein in each precursor, independently from the other precursors, X is selected from the group consisting of Cl, F, Br, I

wherein in said reaction mixture the molar ratio of the elements Li, M1, X resp. Li, M1, X and one of M2 and M3 matches general formula (I).

Preferably the reaction mixture prepared or provided in step (a) consists of the precursors (1) and (2) resp. (1), (2) and (3) as defined above.

In each of precursors (1), (2) and (3) X may be selected independently. Preferably, in each compound of precursors (1) and (2) of a reaction mixture, X is the same, preferably Cl.

Preferably, precursor (1) is LiCl.

When precursor (3) is $M2X_3$, then in precursors (2) $M1X_3$ and (3) $M2X_3$, M1 and M2 are different trivalent metals. M1 and M2 may be selected from the group consisting of Sb, Nb and Mo (antimony, niobium and molybdenum, in each case in the oxidation state +3), and Sc, Al, In and Y (scandium, aluminium, indium and yttrium). Preferably, M1 and M2 are different trivalent metals selected from the group consisting of Sc, Al, In and Y. Preferably, the precursors (2) $M1X_3$ and (3) $M2X_3$ are selected from the group consisting of $ScX_3$, $AlX_3$, $InX_3$ and $YX_3$ wherein the precursors $M1X_3$

and M2X$_3$ are different. Most preferably, the precursors (2) M1X$_3$ and (3) M2X$_3$ are selected from the group consisting of ScCl$_3$, AlCl$_3$, InCl$_3$ and YCl$_3$ wherein the precursors M1X$_3$ and M2X$_3$ are different.

When precursor (3) is M3X$_2$, M3 may be selected from the group consisting of Mg, Ca, and Zn (magnesium, calcium and zinc). Preferably, the precursor M3X$_2$ is selected from the group consisting of MgX$_2$, CaX$_2$ and ZnX$_2$, more preferably from the group consisting of MgCl$_2$, CaCl$_2$ and ZnCl$_2$.

In certain cases, the reaction mixture prepared or provided in step a) of the process according to the above-defined second aspect consists of the precursors

(1) LiX

(2) a compound M1X$_3$ wherein M1 is a trivalent metal

wherein in each precursor, independently from the other precursors, X is selected from the group consisting of Cl, F, Br, I.

In said reaction mixture, precursor (3) as defined above is not present. Such reaction mixtures are suitable for preparing solid materials having a composition according to general formula (Ia) as defined above wherein c = 0. Thus, a reaction mixture suitable for preparing a solid material having a composition according to general formula (Ia) wherein c = 0 consists of the precursors

(1) LiX

(2) a compound M1X$_3$ wherein M1 is a trivalent metal

wherein in each compound of precursors (1) and (2), X is independently selected from the group consisting of Cl, F, Br, I,

wherein in said reaction mixture the molar ratio of the elements Li, M1, and X matches general formula (Ia) wherein c = 0.

In each of precursors (1) and (2), X may be selected independently. Preferably, in each precursor of a reaction mixture, X is the same, preferably Cl.

Preferably, precursor (1) is LiCl.

In precursor (2) M1X$_3$, M1 may be selected from the group consisting of Sb, Nb and Mo (antimony, niobium and molybdenum, in each case in the oxidation state +3), and Sc, Al, In and Y (scandium, aluminium, indium and yttrium). Preferably, M1 is a trivalent metal selected from the group consisting of Sc, Al, In and Y.

Thus, in certain processes according to the above-defined second aspect, the reaction mixture consists of precursors (1) and (2) as defined above, wherein precursor (2) is a compound M1X$_3$ wherein M1 is a trivalent metal selected from the group consisting of Sc, Al, In and Y, wherein in said reaction mixture the molar ratio of the elements Li, M1 and X matches general formula (I).

Preferably, precursor (2) M1X$_3$ is selected from the group consisting of ScX$_3$, AlX$_3$, InX$_3$ and YX$_3$. More preferably, precursor (2) M1X$_3$ is selected from the group consisting of ScCl$_3$, AlCl$_3$, InCl$_3$ and YCl$_3$. For instance, precursor (2) M1X$_3$ is ScCl$_3$ or InCl$_3$.

Especially preferably, precursor (1) is LiCl and precursor (2) is selected from the group consisting of ScCl$_3$, AlCl$_3$, InCl$_3$ and YCl$_3$. For instance, precursor (1) is LiCl and precursor (2) is ScCl$_3$ or InCl$_3$.

In other cases, the reaction mixture prepared or provided in step a) of the process according to the above-defined second aspect consists of the precursors

(1) LiX

(2) a compound M1X3 wherein M1 is a trivalent metal

(3) a compound M2X$_3$ wherein M2 is a trivalent metal different from M1

wherein in each precursor, independently from the other precursors, X is selected from the group consisting of Cl, F, Br, I.

Such reaction mixtures are suitable for preparing solid materials having a composition according to general formula (Ia) as defined above wherein c > 0. Thus, a reaction mixture suitable for preparing a solid material having a composition according to general formula (Ia) wherein c > 0 consists of the precursors

(1) LiX

(2) a compound M1X$_3$ wherein M1 is a trivalent metal

and

(3) a compound M2X$_3$ wherein M2 is a trivalent metal different from M1

wherein in each compound of precursors (1) and (2) X is independently selected from the group consisting of Cl, F, Br, I,

wherein in said reaction mixture the molar ratio of the elements Li, M1, M2 and X matches general formula (Ia) wherein c > 0.

In each of precursors (1), (2) and (3), X may be selected independently. Preferably, in each precursor of a reaction mixture, X is the same, preferably Cl.

Preferably, precursor (1) is LiCl.

In precursors (2) M1X$_3$ and (3) M2X$_3$, M1 and M2 are different trivalent metals. M1 and M2 may be selected from the group consisting of Sb, Nb and Mo (antimony, niobium and molybdenum, in each case in the oxidation state +3), and Sc, Al, In and Y (scandium, aluminium, indium and yttrium). Preferably, M1 and M2 are trivalent metals selected from the group consisting of Sc, Al, In and Y.

Thus, in certain processes according to the above-defined second aspect, the reaction mixture consists of precursors (1) and (2) and (3) as defined above, wherein precursor (3) consists of a compound M2X$_3$ wherein M2 is a trivalent metal selected from the group consisting of Sc, Al, In and Y with the proviso that M2 is different from M1, wherein in said reaction mixture the molar ratio of the elements Li, M1, M2 and X matches general formula (Ia).

Preferably, the precursors (2) M1Xs and (3) M2X$_3$ are selected from the group consisting of ScX$_3$, AlX$_3$, InX$_3$ and YX$_3$ wherein the precursors (2) M1Xs and (3) M2X$_3$ are different.

Most preferably, the precursors (2) M1X$_3$ and (3) M2X$_3$ are selected from the group consisting of ScCl$_3$, AlCl$_3$, InCl$_3$ and YCl$_3$ wherein the precursors (2) M1X$_3$ and (3) M2X$_3$ are different. For instance, precursor (2) is ScCl$_3$ and precursor (3) is InCl$_3$.

Especially preferably, precursor (1) is LiCl and precursors (2) and (3) are different compounds selected from the group consisting of ScCl$_3$, AlCl$_3$, InCl$_3$ and YCl$_3$. For instance, precursor (1) is LiCl, precursor (2) is ScCl$_3$ and precursor (3) is InCl$_3$.

In yet other cases, the reaction mixture prepared or provided in step a) of the process according to the above-defined second aspect consists of the precursors

(1) LiX

(2) a compound M1X$_3$ wherein M1 is a trivalent metal

(3) a compound M3X$_2$ wherein M3 is a divalent metal

wherein in each precursor, independently from the other precursors, X is selected from the group consisting of Cl, F, Br, I.

Such reaction mixtures are suitable for preparing solid materials having a composition according to general formula (Ib) as defined above. Thus, a reaction mixture suitable for preparing a solid material having a composition according to general formula (Ib) consists of the precursors

(1) LiX

(2) a compound M1X$_3$ wherein M1 is a trivalent metal

and

(3) a compound M3X$_2$ wherein M3 is a divalent metal

wherein in each compound of precursors (1) and (2), X is independently selected from the group consisting of Cl, F, Br, I,

wherein in said reaction mixture the molar ratio of the elements Li, M1, M3, and X matches general formula (Ib).

In each of precursors (1), (2) and (3), X may be selected independently. Preferably, in each precursor of a reaction mixture, X is the same, preferably Cl.

Preferably, precursor (1) is LiCl.

In precursor (2) $M1X_3$ M1 may be selected from the group consisting of Sb, Nb and Mo (antimony, niobium and molybdenum, in each case in the oxidation state +3), and Sc, Al, In and Y (scandium, aluminium, indium and yttrium). Preferably, M1 is a trivalent metal selected from the group consisting of Sc, Al, In and Y.

In precursor (3) $M3X_2$, M3 may be selected from the group consisting of Mg, Ca, and Zn (magnesium, calcium and zinc).

Thus, in certain processes according to the above-defined second aspect, the reaction mixture consists of precursors (1) and (2) and (3) as defined above, wherein precursor (3) consists of a compound $M3X_2$ wherein M3 is a divalent metal selected from the group consisting of Mg, Ca and Zn, wherein in said reaction mixture the molar ratio of the elements Li, M1, X and M3 matches general formula (Ib).

Preferably, precursor (2) $M1X_3$ is selected from the group consisting of $ScX_3$, $AlX_3$, $InX_3$ and $YX_3$. More preferably, precursor (2) $M1X_3$ is selected from the group consisting of $ScCl_3$, $AlCl_3$, $InCl_3$ and $YCl_3$. For instance, precursor (2) $M1X_3$ is $ScCl_3$ or $InCl_3$.

Preferably, precursor (3) $M3X_2$ is selected from the group consisting of $MgX_2$, $CaX_2$ and $ZnX_2$, more preferably from the group consisting of $MgCl_2$, $CaCl_2$ and $ZnCl_2$.

Especially preferably, precursor (1) is LiCl and precursor (2) is selected from the group consisting of $ScCl_3$, $AlCl_3$, $InCl_3$ and $YCl_3$ and precursor (3) is selected from the group consisting of $MgCl_2$, $CaCl_3$, and $ZnCl_2$. For instance, precursor (1) is LiCl and precursor (2) is $ScCl_3$ and precursor (3) is $MgCl_2$, or precursor (1) is LiCl and precursor (2) is $InCl_3$ and precursor (3) is $MgCl_2$.

The reaction mixture may be obtained by grinding together the precursors so that a powder is obtained, and optionally pressing the powder into pellets.

In step b) of the process according to the above-defined second aspect, the reaction mixture is allowed to react so that a solid material having a composition according to general formula (I) is obtained. In otherwords, in step b) the precursors in the reaction mixture react with each other to obtain a solid material having a composition according to general formula (I).

In step (b) reacting the reaction mixture may be achieved by

(b-1) heat-treating the reaction mixture in a temperature range of from 300 °C to 700 °C for a total duration of from 30 hours to 100 hours so that a reaction product is formed, and cooling the obtained reaction product so that a solid material having a composition according to general formula (I) is obtained

or

(b-2) ball-milling the reaction mixture at a rate of 300 to 500 rpm for 20 to 40 hours so that a solid material having a composition according to general formula (I) is obtained.

In certain processes according to the above-defined second aspect, the reaction mixture prepared or provided in process step a) is heat-treated in step b) to enable the reaction of the precursors. The reaction mixture may be in the form of a powder, or in the form of pellets.

Heat-treating may be performed in a closed vessel. The closed vessel may be a sealed quartz tube or any other type of container which is capable of withstanding the temperature of the thermal treatment and is not subject to reaction with any of the precursors, such as a glassy carbon crucible or a tantalum crucible.

In step b) the reaction mixture may be heat-treated in a temperature range of from 300 °C to 700 °C for a total duration of from 30 hours to 100 hours so that a reaction product is formed. More specifically, in step b) the reaction mixture may be heat-treated in a temperature range of from 500 °C to 700 °C for a total duration of 40 hours to 80 hours.

Most preferably in step (b) the reaction mixture is heated to a heat treating temperature in the range of from 600 °C to 700 °C, more preferably 620 °C to 680 °C with a ramp rate in the range of rom 2 to 10 °C/min and heat treated at said temperature for a total duration of from 30 hours to 60 hours so that a reaction product is formed, and the obtained reaction product is cooled so that a solid material having a composition according to general formula (I) and a spinel structure as explained above is obtained.

The heat treating temperature is preferably selected slightly above the melting point of precursor (1) so that precursor (1) is in the molten state. It appears that the reaction of the reaction mixture is promoted when precursor (1) is in the molten state. Herein precursor (1) is preferably LiCl.

When the duration of the heat treatment of step b) is completed, the formed reaction product is allowed to cool down. Thus, a solid material having a composition according to general formula (I) is obtained. Cooling of the reaction product is preferably performed using a cooling rate of from 0.1 to 10 °C per minute, or by quenching with water.

Reacting the reaction mixture prepared or provided in step a) by means of heat-treating in step b) as described above results in formation of a solid material having a composition according to general formula (I) which has a spinel structure as defined above. Such materials having a spinel structure can be obtained from any of the reaction mixtures described above, especially from the preferred ones, especially those wherein X in all precursors is Cl.

In certain other processes according to the above-defined second aspect, the reaction mixture prepared or provided in process step a) is ball-milled in step b) to enable the reaction of the precursors. The reaction mixture may be in the form of a powder, or in the form of pellets.

Ball-milling of the reaction mixture is preferably carried out at a rate of 300 to 500 rpm for 20 to 40 hours. Preparation of lithium-conducting solid electrolytes by ball milling a reaction mixture comprising appropriate precursors is known in the art.

Reacting the reaction mixture prepared or provided in step a) by means of ball-milling in step b) as described above results in formation of a solid material having a composition according to general formula (I) which has a glassy ceramic structure, i.e. is a polycrystalline solid having at least 30 % by volume of a glassy phase.

Preferred processes according to the second aspect as defined herein are those having one or more of the specific features disclosed above.

A solid material according to the above-defined first aspect resp. obtained by the process according to the above-defined second aspect can be used as a solid electrolyte for an electrochemical cell. Herein the solid electrolyte may form a component of a solid structure for an electrochemical cell, wherein said solid structure is selected from the group consisting of cathode, anode and separator. Accordingly, a solid material according to the above-defined first aspect resp. obtained by the process according to the above-defined second aspect can be used (if necessary in combination with additional components) for producing a solid structure for an electrochemical cell, such as a cathode, an anode or a separator.

Thus, the present disclosure further provides the use of a solid material according to the above-defined first aspect resp. obtained by the process according to the above-defined second aspect as a solid electrolyte for an electrochemical cell. Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

More specifically, the present disclosure further provides the use of a solid material according to the above-defined first aspect resp. obtained by the process according to the above-defined second aspect as a component of a solid structure for an electrochemical cell, wherein said solid structure is selected from the group consisting of cathode, anode and separator.

In the context of the present disclosure, the electrode where during discharging a net negative charge occurs is called the anode and the electrode where during discharging a net positive charge occurs is called the cathode. Suitable electrochemically active cathode materials (cathode active materials) and suitable electrochemically active anode materials (anode active materials) are known in the art and described above. Preferably the cathode active material is a cathode active material according to general formula (II) resp. (IIa) as defined below which contains at least one of Ni and Mn.

The separator electronically separates a cathode and an anode from each other in an electrochemical cell.

The cathode of an all-solid-state electrochemical cell usually comprises beside an active cathode material as a further component a solid electrolyte. Also the anode of an all-solid-state electrochemical cell usually comprises a solid electrolyte as a further component beside an active anode material. Said solid electrolyte may be a solid material according to the above-defined first aspect resp. obtained by the process according to the above-defined second aspect.

The present disclosure further provides a solid structure for an electrochemical cell, wherein the solid structure is selected from the group consisting of cathode, anode and separator, wherein the solid structure for an electrochemical cell comprises a solid material according to the above-defined first aspect resp. obtained by the process according to the above-defined second aspect. Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

In certain cases, said solid structure is a cathode. Such cathode may comprise a mixture comprising one or more cathode active materials and a solid material according to the above-defined first aspect resp. obtained by the process according to the above-defined second aspect. Further constituents of said mixture are one or more selected from the group consisting of electron conducting materials and binding agents.

In certain cases, said cathode comprises a cathode active material having a redox potential of 4 V or more vs. Li/Li$^+$ (cathode active material of the "4 V class"). Due to its favorable oxidation stability, a solid material according to the above-defined first aspect resp. obtained by the process according to the above-defined second aspect may be applied as a solid electrolyte in direct contact with a cathode active material having a redox potential of 4 V or more, preferably of 4.5 V or more vs. Li/Li$^+$. Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

For instance, a solid material according to the above-defined first aspect resp. obtained by the process according to the above-defined second aspect may form a layer covering particles of one or more cathode active materials.

For instance, a solid material according to the above-defined first aspect resp. obtained by the process according to the above-defined second aspect may form a matrix wherein particles of one or more cathode active materials are embedded.

More specifically, in such cathode, a solid material according to the above-defined first aspect resp. obtained by the process according to the above-defined second aspect may form a coating on the surface of the cathode active material which may protect the solid electrolyte material of the separator layer of a cell comprising such cathode from being oxidized by the cathode active material.

A cathode as described herein may comprise

- cathode active materials in a total amount of from 50 % to 99 %, more preferably of from 70 % to 97 %, relative to the total mass of the cathode

- a solid material according to the above-defined first aspect resp. obtained by the process according to the above-defined second aspect in a total amount of from 1 % to 50 %, more preferably of from 10 % to 30 %, further preferably of from 15 % to 25 %, relative to the total mass of the cathode

- optionally, electron conducting materials in a total amount of from 1 % to 5%, more preferably from 1 % to 2 %, relative to the total mass of the cathode.

- optionally, binding agents in a total amount of from 0.1 % to 3 %, relative to the total mass of the cathode.

Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

Typical electron-conducting materials are those comprising or consisting of elemental carbon, e.g. carbon black and graphite. Typical binding agents are poly(vinylidenefluroride) (PVDF), styrene-butadiene rubber (SBR), polyisobutene, polyethylene vinyl acetate), polyacrylonitrile butadiene).

Suitable electrochemically active cathode materials (cathode active materials) are known in the art. Preferred cathode active materials are those having a redox potential of 4 V or more vs. Li/Li$^+$ (cathode active material of the "4 V class"), which enable obtaining a high cell voltage. Many such cathode active materials are known in the art.

A class of suitable cathode active materials are oxides comprising lithium and one or more members of the group consisting of nickel, cobalt and manganese. Preferred cathode active materials are oxides comprising lithium and at least one of nickel, cobalt and manganese.

In certain cases, the above-defined solid structure is a cathode comprising one or more cathode active materials selected from the group consisting of materials having a composition according to general formula (II)

$$Li_{1+t}[Co_xMn_yNi_zM_u]_{1-t}O_2 \qquad (II)$$

wherein

$$0 \le x \le 1$$

$$0 \le y \le 1$$

$$0 \le z \le 1$$

$$0 \le u \le 0.15$$

M if present is one or more elements selected from the group consisting of Al, Mg, Ba, B, and transition metals other than Ni, Co, and Mn,

$$x + y + z + u = 1$$

$$-0.05 \le t \le 0.2.$$

Preferably, the cathode active material according to general formula (II) contains at least one of Ni and Mn.

In certain cathode active materials according to formula (II), M may be one of Al, Mg, Ti, Mo, Nb, W and Zr. Exemplary cathode active materials of formula (II) are $Li_{1+t}[Ni_{0.88}Co_{0.08}Al_{0.04}]_{1-t}O_2$, $Li_{1+t}[Ni_{0.905}Co_{0.0475}Al_{0.0475}]_{1-t}O_2$, and $Li_{1+t}[Ni_{0.91}Co_{0.045}Al_{0.045}]_{1-t}O_2$, wherein in each case $-0.05 \le t \le 0.2$.

In other cathode active materials according to formula (II), M is not present. Those cathode active materials have a composition according to general formula (IIa):

$$Li_{1+t}[Co_xMn_yNi_z]_{1-t}O_2 \qquad (IIa)$$

wherein

$$0 \le x \le 1$$

$$0 \le y \le 1$$

$$0 \le z \le 1$$

$$x + y + z = 1$$

$$-0.05 \le t \le 0.2.$$

Exemplary cathode active materials according to formula (IIa) are $LiCoO_z$, $Li_{1+t}[Ni_{0.85}Co_{0.10}Mn_{0.05}]_{1-t}O_2$, $Li_{1+t}[Ni_{0.85}Mn_{0.10}Co_{0.05}]_{1-t}O_2$, $Li_{1+t}[Ni_{0.87}Co_{0.05}Mn_{0.08}]_{1-t}O_2$, $Li_{1+t}[Ni_{0.83}Co_{0.12}Mn_{0.05}]_{1-t}O_2$, and $Li_{1+t}[Ni_{0.6}Mn_{0.2}CO_{0.2}]_{1-t}O_2$ (NMC622).

Preferably, the cathode active material according to general formula (IIa) contains at least one of Ni and Mn.

The present disclosure further provides an electrochemical cell comprising

- a solid material according to the above-defined first aspect resp. obtained by the process according to the above-defined second aspect

- or a solid structure as defined above, preferably a cathode as defined above.

Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

In said electrochemical cell, the solid material according to the above-defined first aspect resp. obtained by the process according to the above-defined second aspect may form a component of one or more solid structures selected from the group consisting of cathode, anode and separator. Preferably said solid structure is a cathode as defined above.

More specifically, there is provided an electrochemical cell as defined above wherein in certain preferred cases a solid material according to the above-defined first aspect resp. obtained by the process according to the above-defined second aspect may be in direct contact with a cathode active material having a redox potential of 4 V or more, preferably of 4.5 V or more vs. Li/Li$^+$. Preferably the cathode active material is a cathode active material according to general formula (II) resp. (IIa) as defined above which contains at least one of Ni and Mn.

Herein, the solid material according to the above-defined first aspect resp. obtained by the process according to the above-defined second aspect may have a composition according to formula (Ia) as defined above resp. according to formula (Ib) as defined above). In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

The above-defined electrochemical cell may be a rechargeable electrochemical cell comprising the following constituents

α) at least one anode,

β) at least one cathode, preferably a cathode comprising a mixture comprising one or more cathode active materials and a solid material according to the above-defined first aspect resp. obtained by the process according to the above-defined second aspect, and one or more selected from the group consisting of electron conducting materials and binding agents (as defined above)

γ) at least one separator,

wherein at least one of the three constituents is a solid structure (selected from the group consisting of cathode, anode and separator) comprising a solid material according to the above-defined first aspect resp. obtained by the process according to the above-defined second aspect.

Preferably, in such electrochemical cell
β) the cathode comprises a mixture comprising one or more cathode active materials and a solid material according to the above-defined first aspect resp. obtained by the process according to the above-defined second aspect, and one or more selected from the group consisting of electron conducting materials and binding agents (as defined above).

Further preferably, in such electrochemical cell

β) the cathode comprises a mixture comprising one or more cathode active materials and a solid material according to the above-defined first aspect resp. obtained by the process according to the above-defined second aspect, and one or more selected from the group consisting of electron conducting materials and binding agents (as defined above)
and

γ) the separator comprises a lithium ion conducting layer which does not comprise a solid material according to formula (I).

Herein, the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0.

In certain cases, said electrochemical cell comprises

- a cathode comprising a cathode active material coated with or covered by or embedded in a solid material according to the first aspect described herein resp. obtained by the process prepared by the second aspect described herein,

- a lithium ion conducting layer which does not comprise a solid material according to formula (I)

- an anode.

Said anode is capable of reversibly plating and stripping lithium, e.g. an anode comprising lithium metal or a metal alloy comprising lithium or a metal capable of alloying with lithium or an electronically conductive material capable of reversibly plating and stripping lithium.

In said electrochemical cell, the solid material according to the above-defined first aspect resp. obtained by the process according to the above-defined second aspect separates the cathode active material from the lithium ion conducting layer which does not comprise a solid material according to formula (I). Since the cathode active material is coated with or embedded in or covered by a solid material according to the above-defined first aspect resp. obtained by the process according to the above-defined second aspect, direct contact between the cathode active material and the lithium ion conducting layer which does not comprise a solid material according to formula (I) is prevented. Thus, coating the cathode active material with a solid material according to the above-defined first aspect resp. obtained by the process according to the above-defined second aspect, or covering the cathode active material by a layer comprising or consisting of a solid material according to the above-defined first aspect resp. obtained by the process according to the above-defined second aspect, or embedding the cathode active material in a matrix formed of a solid material according to the above-defined first aspect resp. obtained by the process according to the above-defined second aspect, allows for implementing electrochemical cells, especially all-solid-state lithium batteries, wherein a cathode active material having a redox potential of 4 V or more vs. Li/Li$^+$ is combined with a solid electrolyte layer resp. separator layer comprising or consisting of a lithium ion conducting material which as such does not exhibit oxidation stability at a redox potential of 4 V or more vs. Li/Li$^+$, e.g. a sulfide-based or oxysulfide-based solid electrolyte. On the other hand, many lithium ion conducting materials which do not have such oxidation stability exhibit one or more favourable properties like stability in the presence of lithium metal or of a metal alloy comprising lithium and ionic conductivity, easy processability, superior ionic conductivity and/or low cost which render them suitable for forming a solid electrolyte layer resp. a separator layer. Thus, the materials of the lithium ion conducting layer (which does not comprise a solid material according to formula (I)) may be suitably selected according to the criteria of stability in the presence of lithium metal or a metal alloy comprising lithium, ionic conductivity, processability and costs, while oxidation stability is not an issue.

The lithium ion conducting layer which does not comprise a solid material according to formula (I) may comprise or consist of one or more lithium ion conducting materials selected from the group consisting of

- lithium-containing garnets,

- lithium containing sulfides (e.g. lithium-containing argyrodites),

- lithium containing oxysulfides,

- lithium-containing phosphates (e.g. lithium aluminum titanium phosphates, lithium aluminum germanium phosphates)

- lithium containing oxyphosphates (e.g. lithium aluminum titanium oxy-phosphates)

- lithium containing oxyphosphonitrides

- lithium aluminum titanium oxides,

- lithium aluminum silicon oxides,

- lithium lanthanum titanium oxide perovskites,

- lithium lanthanum tantalum oxide perovskites,

- antiperovskites (family of materials with an antiperovskite crystal structure and the composition $Li_aO_bX_cH_dM_e$ where X is selected from Cl, Br, I, and F and mixtures thereof, and M is selected from Al, Ge, and Ga; $2<a<4$, $0.7<b<1.3$, $0.7<c<1.3$, $0\leq d<1$, $0\leq e<1$)

- lithium-containing borohydrides,

- gel electrolytes including a lithium salt (e.g. selected from $LiPF_6$, lithium bis(oxalato)borate (LiBOB), lithium bis(perfluoroethanesulfonyl)imide (LIBETI), lithium bis(trifluoromethanesulfonyl)imide (LiTFSi), $LiBF_4$, $LiClO_4$, LiAsF6, lithium bis(fluorosulfonyl)imide (LiFSI), $LiAsF_6$, and LiI), a polymer (e.g. selected from the group consisting of polyacrylonitrile (PAN), polypropylene, polyethylene oxide (PEG), polymethyl methacrylate (PMMA), polyvinyl chloride (PVC), polyvinyl pyrrolidone (PVP), polyethylene oxide poly(allyl glycidyl ether) PEO-AGE, polyethylene oxide 2-methoxyethoxy)ethyl glycidyl ether (PEO-MEEGE), polyethylene oxide 2-methoxyethoxy)ethyl glycidyl poly(allyl glycidyl ether) (PEO-MEEGE-AGE), polysiloxane, polyvinylidene fluoride (PVDF), polyvinylidene fluoride hexafluoropropylene (PVDF-F1FP), ethylene propylene (EPR), nitrile rubber (NPR), styrene-butadiene-rubber (SBR), polybutadiene polymer, polybutadiene rubber (PB), polyisobutadiene rubber (PIB), polyisoprene rubber (PI), polychloroprene rubber (CR), acrylonitrilebutadiene rubber (NBR), polyethyl acrylate (PEA), polyvinylidene fluoride (PVDF), and polyethylene), and a solvent (e.g. selected from the group consisting of ethylene carbonate (EC), diethylene carbonate or diethyl carbonate (DC), dimethyl carbonate (DMC), ethyl-methyl carbonate (EMC), tetrahydrofuran (THF),gamma-Butyrolactone (GBL), fluoroethylene carbonate (FEC), fluoromethyl ethylene carbonate (FMEC), trifluoroethyl methyl carbonate (F-EMC), fluorinated 3-(1,1,2,2-tetrafluoroethoxy)-1,1,2,2-tetrafluoropropane(F-EPE), fluorinated cyclic carbonate (F-AEC), propylene carbonate (PC), dioxolane, acetonitrile (ACN), succinonitrile, adiponitrile, hexanedinitrile, pentanedinitrile, acetophenone, isophorone, benzonitrile, dimethyl sulfate, prop-1-ene-1,3-sultone (PES), dimethyl sulfoxide (DMSO), ethyl-methyl carbonate, ethyl acetate, methyl butyrate, dimethyl ether (DME), diethyl ether, propylene carbonate, dioxolane, glutaronitrile, gamma butyllactone, and combinations thereof).

These and other lithium ion conducting materials are known in the art. For further details, see e.g. US 2017/0331092 A1.

For instance, said lithium ion conducting layer which does not comprise a solid material according to formula (I) comprises or consists of one or more of lithium containing sulfides, lithium containing oxysulfides, lithium-containing oxyphosphates and lithium containing oxyphosphonitrides.

More specifically, an electrochemical cell comprising a solid material according to the above-defined first aspect resp. obtained by the process according to the above-defined second aspect may have a structure wherein

(a) a layer comprising or consisting of a solid material according to formula (I) (i.e. a solid material according to the above-defined first aspect resp. obtained by the process according to the above-defined second aspect)

is sandwiched between and is in direct contact with

(b) a layer comprising a cathode active material

(c) a lithium ion conducting layer which does not comprise a solid material according to formula (I), said lithium ion conducting layer (c) being in direct contact with an anode, e.g. an anode comprising lithium metal or a metal alloy comprising lithium.

Said anode is capable of reversibly plating and stripping lithium, e.g. an anode comprising lithium metal or a metal alloy comprising lithium or a metal capable of alloying with lithium or an electronically conductive material capable of reversibly plating and stripping lithium.

In other words, said electrochemical cell comprises a sequence of layers which in the order of stacking consists of

- a layer (b) comprising a cathode active material

- a layer (a) comprising or consisting of a solid material according to formula (I) (i.e. a solid material according to the above-defined first aspect resp. obtained by the process according to the above-defined second aspect)

- a lithium ion conducting layer (c) which does not comprise a solid material according to formula (I),

- an anode, e.g. an anode comprising lithium metal or a metal alloy comprising lithium.

In said layer (a), the solid material according to the above-defined first aspect resp. obtained by the process according to the above-defined second aspect may have a composition according to formula (Ia) as defined above resp. according to formula (Ib) as defined above. In certain cases, the solid material may have a composition according to formula (Ia) wherein c = 0. Regarding specific and preferred solid materials according to the above-defined first aspect resp. obtained by the process according to the above-defined second aspect, the same applies as disclosed above in the context of the first aspect.

In layer (b), the cathode active material is preferably a cathode active material according to general formula (II) resp. (IIa) which contains at least one of Ni and Mn. Beside a cathode active material, layer (b) may comprise a solid electrolyte, and one or more selected from the group consisting of electron conducting materials and binding agents. In certain cases, the solid electrolyte in layer (b) is a solid material according to formula (I) (i.e. a solid material according to the above-defined first aspect resp. obtained by the process according to the above-defined second aspect). Preferably, the solid material according to formula (I) (i.e. a solid material according to the above-defined first aspect resp. obtained by the process according to the above-defined second aspect) in layer (a) and in layer (b) has the same composition.

In the above-described electrochemical cell, layer (c) acts as a solid electrolyte layer resp. separator layer.

In layer (b), the cathode active material is preferably selected from cathode active materials having a redox potential of 4 V or more vs. $Li/Li^+$ (cathode active material of the "4 V class"). In case that the cathode active material has a redox potential of 4 V or more vs. $Li/Li^+$ while the lithium ion conducting layer (c) does not have electrochemical oxidation stability up to 4 V vs $Li/Li^+$, the layer (a) comprising or consisting of a solid material according to formula (I) (i.e. a solid material according to the above-defined first aspect resp. obtained by the process according to the above-defined second aspect) serves as a protection layer protecting the solid electrolyte in layer (c) from being oxidized by the cathode material. Thus, the material of the lithium ion conducting layer (c) (which does not comprise a solid material according to formula (I)) may be suitably selected according to the criteria of stability in the presence of lithium metal or a metal alloy comprising lithium, ionic conductivity, processability and costs, while oxidation stability is not an issue.

Thus, coating the cathode active material with a solid material according to formula (I) or covering the cathode active material by a layer comprising or consisting of a solid material according to formula (I) allows for implementing electrochemical cells, especially all-solid-state lithium batteries, wherein a cathode active materials having a redox potential of 4 V or more vs. $Li/Li^+$ is combined with a solid electrolyte layer resp. separator layer comprising or consisting of a lithium ion conducting material which as such does not exhibit oxidation stability at a redox potential of 4 V or more vs. $Li/Li^+$, e.g. sulfide-based solid electrolytes. On the other hand, many lithium ion conducting materials which do not have oxidation stability exhibit one or more favourable properties like stability in the presence of lithium metal or a metal alloy comprising lithium and ionic conductivity, easy processability, superior ionic conductivity and/or low cost which render them suitable for forming a solid electrolyte layer resp. a separator layer.

Electrochemical cells as described above may be alkali metal containing cells, especially lithium-ion containing cells. In lithium-ion containing cells, the charge transport is effected by $Li^+$ ions.

Suitable electrochemically active cathode materials (cathode active materials) and suitable electrochemically active anode materials (anode active materials) are known in the art. Exemplary cathode active materials are disclosed above. Preferably the cathode active material is a cathode active material according to general formula (II) resp. (IIa) which contains at least one of Ni and Mn. Exemplary anode active materials are graphitic carbon, metallic lithium and metal alloys comprising lithium.

The electrochemical cell may have a disc-like or a prismatic shape. The electrochemical cells can include a housing that can be from steel or aluminum.

A plurality of electrochemical cells as described above may be combined to an all-solid-state battery, which has both solid electrodes and solid electrolytes. A further aspect of the present disclosure refers to batteries, more specifically to an alkali metal ion battery, in particular to a lithium ion battery comprising at least one electrochemical cell as described above, for example two or more electrochemical cells as described above. Electrochemical cells as described above can be combined with one another in alkali metal ion batteries, for example in series connection or in parallel connection. Series connection is preferred.

The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of this disclosure is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electro-chemical cell as described above. Preferred are mobile devices such as are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated further by the following examples which are not limiting.

Examples

1. Material preparation

Materials having the compositions indicated in table 1 were obtained by mixing stoichiometric amounts of precursor (1) LiCl (Sigma-Aldrich, 99.9%) and precursor (2) and optionally precursor (3) together at the targeted ratio.

The obtained reaction mixtures were pelletized and placed in sealed quartz tubes under vacuum. The quartz tubes were heated to 650 °C with an increasing rate of 5 °C·min$^{-1}$ heat treated at said temperature for a total duration of 48 hours and cooled with a cooling rate of 10 °C·h$^{-1}$.

## 2. Ionic conductivity

The ionic conductivity was measured by electrochemical impedance spectroscopy (EIS). Typically, 150 mg powder of the material to be tested was placed between two stainless steel rods and pressed into a 10 mm diameter pellet by a hydraulic press at 3 tons for 1 min in an Ar-filled glovebox. EIS experiments were performed with 100 mV amplitude within a frequency range of 1 MHz-100 mHz using a VMP3 potentiostat/galvanostat (Bio-Logic). The conductivities of the tested materials are compiled in table 1.

Table 1

| Material composition | Precursor (2) | Precursor (3) | Ionic conductivity [mS/cm] |
|---|---|---|---|
| Materials according to formula (Ia) wherein c=0 | | | |
| $Li_{2.08}Sc_{0.64}Cl_4$ | $ScCl_3$ | - | 1.09 |
| $Li_2Sc_{2/3}Cl_4$ | $ScCl_3$ | - | 1.5 |
| $Li_{1.9}Sc_{0.7}Cl_4$ | $ScCl_3$ | - | 1.22 |
| $Li_{1.6}Sc_{0.8}Cl_4$ | $ScCl_3$ | | |
| $Li_2In_{2/3}Cl_4$ | $InCl_3$ | | 1.12 |
| Materials according to formula (Ia) wherein $0.1 \leq c \leq 0.7$ | | | |
| $Li_2In_{0.555}Sc_{0.111}Cl_4$ | $ScCl_3$ | $InCl_3$ | 1.89 |
| $Li_2In_{0.444}Sc_{0.222}Cl_4$ | $ScCl_3$ | $InCl_3$ | 2.05 |
| $Li_2In_{0.333}Sc_{0.333}Cl_4$ | $ScCl_3$ | $InCl_3$ | 1.99 |
| $Li_2In_{0.222}Sc_{0.444}Cl_4$ | $ScCl_3$ | $InCl_3$ | 1.83 |
| $Li_2In_{0.111}Sc_{0.555}Cl_4$ | $ScCl_3$ | $InCl_3$ | 1.93 |
| Materials according to formula (Ib) | | | |
| $Li_{1.65}Mg_{0.65}Sc_{0.35}Cl_4$ | $ScCl_3$ | $MgCl_2$ | 0.10 |
| $Li_{1.5}Mg_{0.5}Sc_{0.5}Cl_4$ | $ScCl_3$ | $MgCl_2$ | 0.23 |
| $Li_{1.35}Mg_{0.35}Sc_{0.65}Cl_4$ | $ScCl_3$ | $MgCl_2$ | 0.43 |
| $Li_{1.3}Mg_{0.3}Sc_{0.7}Cl_4$ | $ScCl_3$ | $MgCl_2$ | 0.31 |
| $Li_{1.25}Mg_{0.25}Sc_{0.75}Cl_4$ | $ScCl_3$ | $MgCl_2$ | 0.25 |
| $Li_{1.65}Mg_{0.65}In_{0.35}Cl_4$ | $InCl_3$ | $MgCl_2$ | 0.036 |
| Comparison material $LiCl/ScCl_3$ molar ratio 9/1 | | | |
| | $ScCl_3$ | - | - |

## 3. Structure analysis

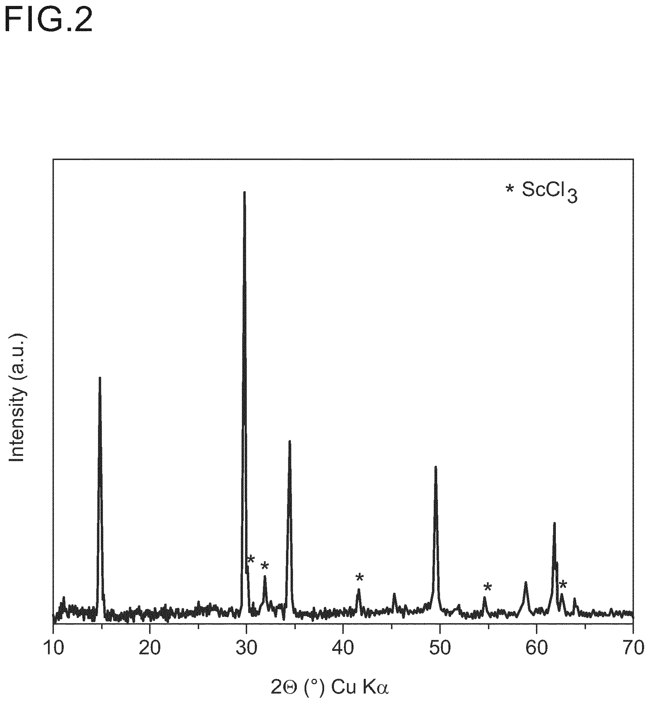

Powder X-ray diffraction (XRD) measurements on all materials were conducted at room temperature on a PANalytical Empyrean diffractometer with Cu-K$\alpha$ radiation that was equipped with a PIXcel bidimensional detector. XRD patterns were obtained in Debye-Scherrer geometry, with samples sealed in 0.5 mm (diameter) glass capillaries under argon. Additional XRD pattern for phase identification (fig. 2) was obtained in Bragg-Brentano geometry, with the sample placed on a zero-background sample holder in an Ar-filled glovebox and protected by Kapton film.

The time-of-flight (TOF) powder neutron diffraction pattern was collected on POWGEN at the Spallation Neutron Source (SNS) at the Oak Ridge National Laboratory. The sample (~1 g) was loaded into a vanadium can under an argon atmosphere and sealed with a copper gasket and aluminum lid. The samples were measured at 300 K, and a single bank wave with a center wavelength of 1.5 Å was used. Structure analysis was performed in the TOPAS V6 software package. The unit cell of $Li_2Sc_{2/3}Cl_4$ was identified through indexing the powder X-ray diffraction data, followed by locating the Cl and Sc positions. As Li possesses a negative neutron scattering length, the neutron pattern was refined using the Rietveld method based on the structural model from powder X-ray data and difference Fourier mapping to locate the Li positions.

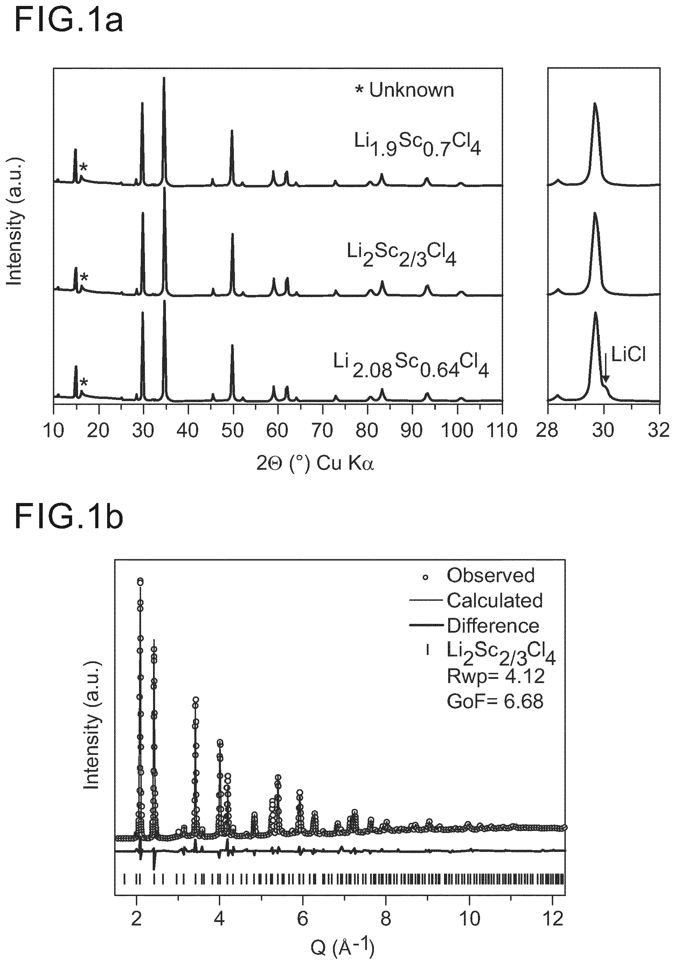

Fig. 1a shows powder X-ray diffraction patterns of $Li_{2.08}Sc_{0.64}Cl_4$ (bottom), $Li_2Sc_{2/3}Cl_4$ (center) and $Li_{1.9}Sc_{0.7}Cl_4$ (top). All reflections correspond to the respective spinel phase except for the unknown impurity as marked; arrows indicate LiCl impurity. Fig. 1b shows the time-of-flight neutron diffraction and the corresponding Rietveld refinement fit of $Li_2Sc_{2/3}Cl_4$, excluded regions (Q = 2.28, 3.01, 4.11 and 4.56 $Å^{-1}$) correspond to traces of unknown impurity phases. Experimental data are shown in circles; the line close to the circles denotes the calculated pattern; the difference profile is shown as a line below the experimental data and the calculated pattern, and calculated positions of the Bragg reflections are shown as vertical ticks. Rwp and GoF are the weighted profile R-factor and goodness of fit respectively.

The X-ray diffraction pattern of $Li_2Sc_{2/3}Cl_4$ (Fig. 1a, center) corresponds to an almost phase-pure polycrystalline powder with only a trace amount of unknown impurities. The pattern was indexed in the same cubic space group, *Fd-3m* which is adopted by other spinel materials. A lower $Sc^{3+}$ content leads to increasing amounts of LiCl impurity, as shown by the pattern of $Li_{2.08}Sc_{0.64}Cl_4$ in Fig. 1a. A slightly higher $Sc^{3+}$ content leads to lower ionic conductivity (see below) and even higher $Sc^{3+}$ content leads to a $ScCl_3$ impurity (Fig. 2).

The structure of spinel $Li_2Sc_{2/3}Cl_4$ was determined from Rietveld refinement of the time of flight powder neutron diffraction pattern, as shown in Fig. 1b and the crystallographic details are summarized in Table 2. The framework is somewhat similar to known spinel $Li_2MgCl_4$. The important difference is that the disordered spinel $Li_2Sc_{2/3}Cl_4$ exhibits 4 Li positions; Li2 and Li3 are not present in spinel $Li_2MgCl_4$ while Li1 and Li4 are also present in spinel $Li_2MgCl_4$. $Li_2MgCl_4$ is constructed from edge-sharing $(Mg1/Li2)Cl_6$ octahedra and Li1 fills the corner-sharing tetrahedral sites. In contrast, while $Li_2Sc_{2/3}Cl_4$ also contains edge-sharing $(Sc1/Li4)Cl_6$ octahedra, Li1,2,3 fill the face-sharing octahedral and tetrahedral sites.

Table 2. Atomic coordinates, occupation factor, and isotropic displacement parameter of $Li_2Sc_{2/3}Cl_4$ obtained from time-of-flight powder neutron diffraction at 300 K

| a = 10.4037 (5) Å, Space group : *Fd-3m* | | | | | | |
| atom | Wyckoff site | x | y | z | Occupancy | Uiso ($Å^2$) |
|---|---|---|---|---|---|---|
| Li1 tet | 8a | 0.125 | 0.125 | 0.125 | 0.141(27) | 0.025(20) |
| Li2 oct | 16c | 0 | 0 | 0 | 0.218(13) | 0.038(5) |
| Li3 tet | 48f | 0.125 | 0.125 | 0.886(16) | 0.0282(63) | 0.025 |
| Li4 oct | 16d | 0.5 | 0.5 | 0.5 | 0.689(2) | 0.0029(6) |
| Sc1 | 16d | 0.5 | 0.5 | 0.5 | 0.311 (2) | 0.0029(6) |
| Cl1 | 32e | 0.25435(6) | 0.25435(6) | 0.25435(6) | 1 | 0.0208(2) |

Without wishing to be bound by theory, it is concluded that the disordered spinel $Li_2Sc_{2/3}Cl_4$ exhibits multiple Li sites (two new Li sites as explained above) compared to the other Li halide spinel materials. Taking $Li_2MgCl_4$ as an example, $Li^+$ ions would likely diffuse through the faces of edge-shared $Li(2)Cl_6$ octahedra that border an empty tetrahedral site. While the Li2 site is also a shared site with $Mg^{2+}$ (half occupied by both $Mg^{2+}$ and $Li^+$), both Li1 and Li2 sites are fully occupied and hence a defect formation step is necessary to sustain macroscopic $Li^+$ ion diffusion. Furthermore, in $Li_2MgCl_4$ divalent $Mg^{2+}$ is present within the main diffusion pathway, which will hinder $Li^+$ ion diffusion due to its presumed low mobility. The sum of these factors result in the high activation energy and low ionic conductivity of $Li_2MgCl_4$ as previously reported. For the disordered spinel $Li_2Sc_{2/3}Cl_4$, the same potential $(Sc1/Li4)Cl_6$ octahedral pathway (via empty face-shared sites as described for $Li_2MgCl_4$) also exists. However, trivalent $Sc^{3+}$ ions also sit within the pathway and are anticipated to block $Li^+$ ion diffusion; thus $Li^+$ ions in this site will have very low mobility, which is supported by their low atomic displacement parameter (Table 2). In short, this Li/Sc shared site forms a rigid framework that allows the diffusion of $Li^+$ ions resident on the other sites. The additional $Li^+$ ions are spread over the other face-sharing octahedral and tetrahedral Li1,2,3 sites, which form an infinite 3D $Li^+$ ion diffusion pathway. The relatively low occupancy of the Li1,2,3 sites result in vacancies which help eliminate the defect formation step for $Li^+$ ion diffusion. The re-distribution of $Li^+$-ion density over available tetrahedral and octahedral sites within the lattice suggests the Li site energies are relatively similar which may lead to a flat energy landscape for $Li^+$ ion diffusion. Overall, the new $Li^+$ ion diffusion pathway with considerable vacancies promotes $Li^+$ ion diffusion with relatively low activation energy.

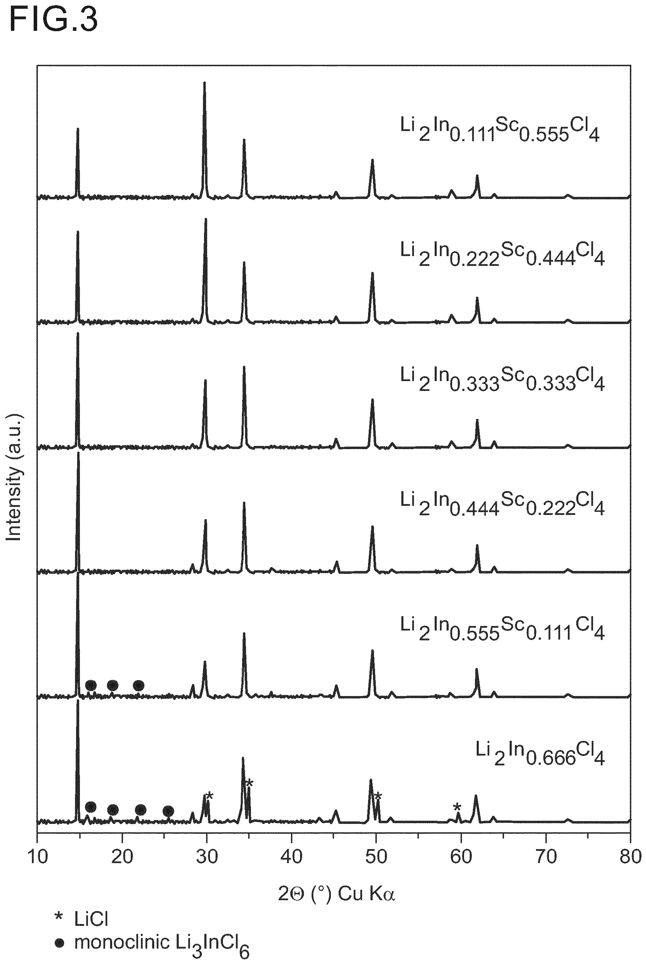

XRD pattern obtained in Bragg-Brentano geometry of further materials listed in table 1 are shown in figs. 3 to 5. The materials

$$Li_2In_{0.444}Sc_{0.222}Cl_4,$$

$$Li_2In_{0.333}Sc_{0.333}Cl_4,$$

$$Li_2In_{0.222}Sc_{0.444}Cl_4,$$

$$Li_2In_{0.111}Sc_{0.555}Cl_4$$

$$Li_{1.65}Mg_{0.65}Sc_{0.35}Cl_4,$$

$$Li_{1.5}Mg_{0.5}Sc_{0.5}Cl_4,$$

$$Li_{1.35}Mg_{0.35}Sc_{0.65}Cl_4,$$

$$Li_{1.3}Mg_{0.3}Sc_{0.7}Cl_4,$$

$$Li_{1.25}Mg_{0.25}Sc_{0.75}Cl_4$$

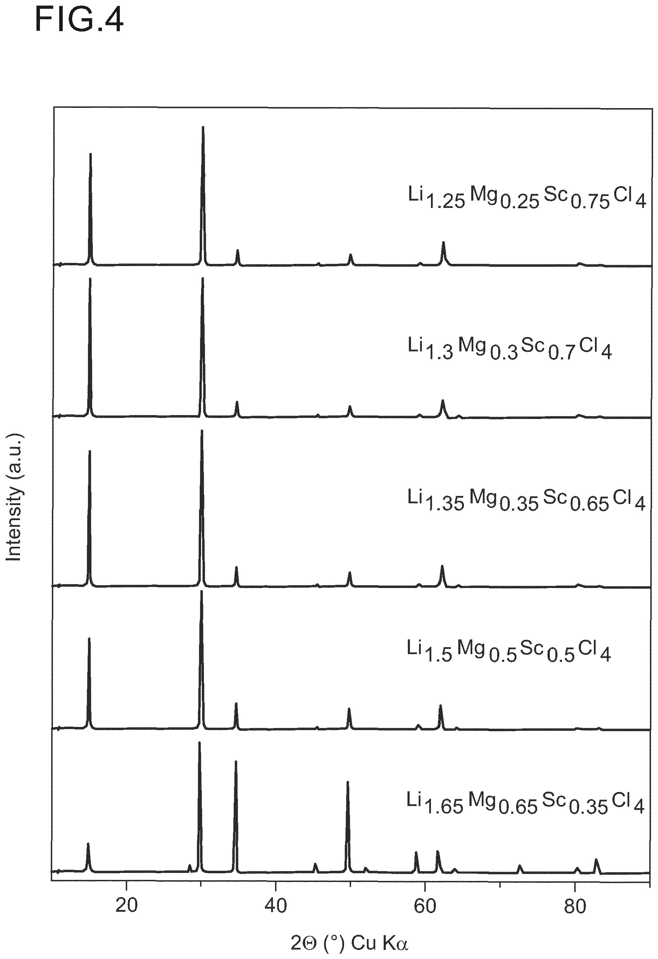

(figs. 3 and 4) are substantially phase pure spinels.

The materials

$$Li_2In_{0.555}Sc_{0.111}Cl_4$$

$$Li_{1.65}Mg_{0.65}In_{0.35}Cl_4$$

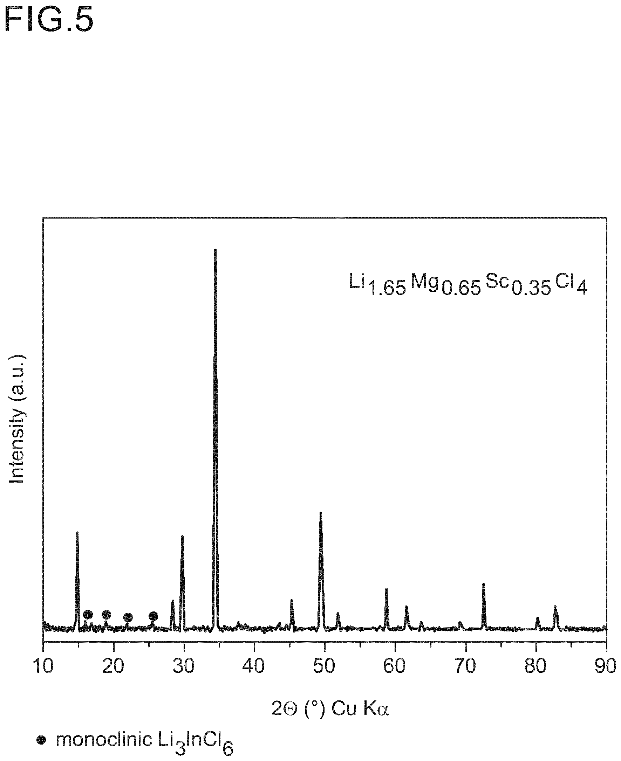

(see fig. 3 resp. 5) contain traces of a monoclinic phase.

The material with the target stoichiometry $Li_2In_{2/3}Cl_4$ (fig. 3) contains a main phase having spinel structure beside minor phases of monoclinic $Li_3InCl_6$ and LiCl

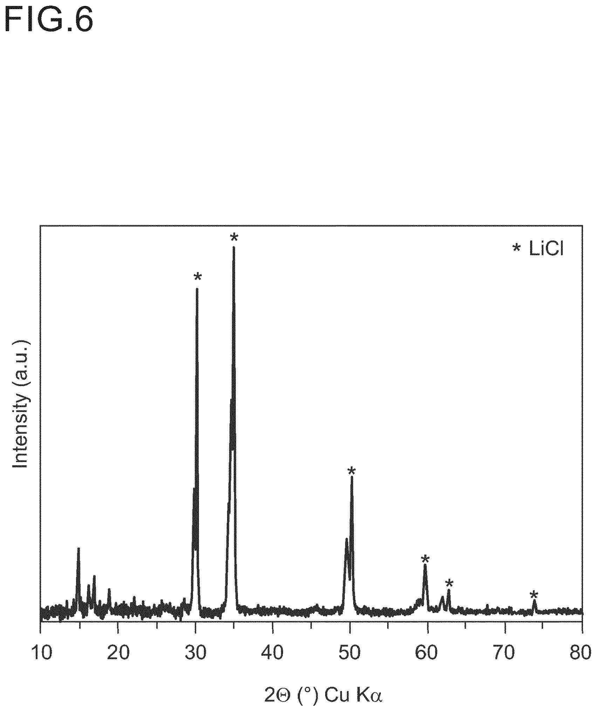

Interestingly a material having a no spinel phase, but a main phase of monoclinic $Li_3ScCl_6$ (fig. 6, XRD pattern obtained in Bragg-Brentano geometry) was obtainable only from a reaction mixture containing a large excess of LiCl (mole ratio $LiCl/ScCl_3$= 9/1, resulting in a stoichiometry (gross formula) $Li_9ScCl_{12}$ (not according to the invention).

4. Electrochemical tests and Scanning electron microscopy

ASSB means all solid state battery.

For linear sweep voltammetry (LSV) measurements, 90 mg of $Li_2Sc_{2/3}Cl_4$ was filled into a polyether ether ketone (PEEK) cylinder (10 mm diameter) and pressed at 2 tons for 1 min. To prepare the $Li_2Sc_{2/3}Cl_4$-carbon composite, $Li_2Sc_{2/3}Cl_4$ and carbon ("Super P") were mixed in a weight ratio of 7:3 and hand-ground in an agate mortar for 15 min. A mass of 5 mg of the composite was put onto one side of the solid electrolyte (SE) pellet to serve as a working electrode and pressed at 2 tons for another 1 min. On the other side of the pellet, a thin indium foil (10 mm diameter, Alfa Aesar, 99.99%, 0.125 mm thickness) was attached and ~0.3 mg Li powder (FMC Lithium) was spread over the indium foil. The cell was then placed into a stainless steel casing with a constant applied pressure of ~1.5 tons. The LSV measurement was performed with a scan rate of $0.01 \ mV \cdot s^{-1}$.

All-solid-state batteries having cathodes employing $Li_2Sc_{2/3}Cl_4$ as solid electrolyte (SE) in combination with one of $LiCoO_2$ (LCO), $LiNi_{0.6}Mn_{0.2}Co_{0.2}O_2$ (NMC622) and $LiNi_{0.85}Mn_{0.1}Co_{0.05}O_2$ (NMC85) as the cathode active material, a separator layer consisting of $Li_{6.7}Si_{0.7}Sb_{0.3}S_5I$, and a Li-In alloy anode were assembled in an argon filled glovebox. $LiCoO_2$ and NMC622 powders were dried in Buechi oven under vacuum at 200 °C for 20 h before use. First, ~ 60 mg of $Li_{6.7}Si_{0.7}Sb_{0.3}S_5I$ powder (a state of the art sulfide-based electrolyte) was placed into a PEEK cylinder and pressed at 2 tons for 1 min (10 mm diameter), then ~ 40 mg of $Li_2Sc_{2/3}Cl_4$ was spread over one side of the solid electrolyte (SE) pellet and pressed at 2 tons for another 1 min. The composite cathode mixtures were prepared by mixing the cathode active material (LCO or NMC622 resp. NMC85) and $Li_2Sc_{2/3}Cl_4$ in an agate mortar in a weight ratio of 8:2. On the $Li_2Sc_{2/3}Cl_4$ side of the SE pellet, ~ 6-9 mg of the composite cathode mixture (corresponding to a capacity of ~1-1.25 $mAh \cdot cm^{-2}$) was spread and pressed at 3 tons for 3 min. On the other side of the pellet, a thin indium foil (10 mm diameter, Alfa Aesar, 99.99%, 0.125 mm thickness) was attached and ~1 mg Li powder (FMC Lithium) was spread over the indium foil in order to create a Li-In alloy. The ASSB was placed into a stainless steel casing with a constant applied pressure of ~1.5 tons. Galvanostatic cycling of the ASSB was carried out in the voltage range of 3 - 4.3 V vs $Li^+/Li$ for the LCO ASSB (1C = 137 $mAh \cdot g^{-1}$) and 2.8 - 4.3 V or 2.8 - 4.6 V vs $Li^+/Li$ for the NMC622 (1C = 180 $mAh \cdot g^{-1}$) ASSB using a

VMP3 (Bio-Logic) cycler.

Thus, the ASSBs comprise

- an anode comprising a lithium-indium alloy

- in contact with the anode, a separator layer consisting of $Li_{6.7}Si_{0.7}Sb_{0.3}S_5I$

- a cathode comprising a composite of a cathode active material (LCO or NMC622 resp. NMC85) and $Li_2Sc_{2/3}Cl_4$, wherein said composite is covered by a layer consisting of $Li_2Sc_{2/3}Cl_4$, wherein said layer consisting of $Li_2Sc_{2/3}Cl_4$ is in contact with the separator.

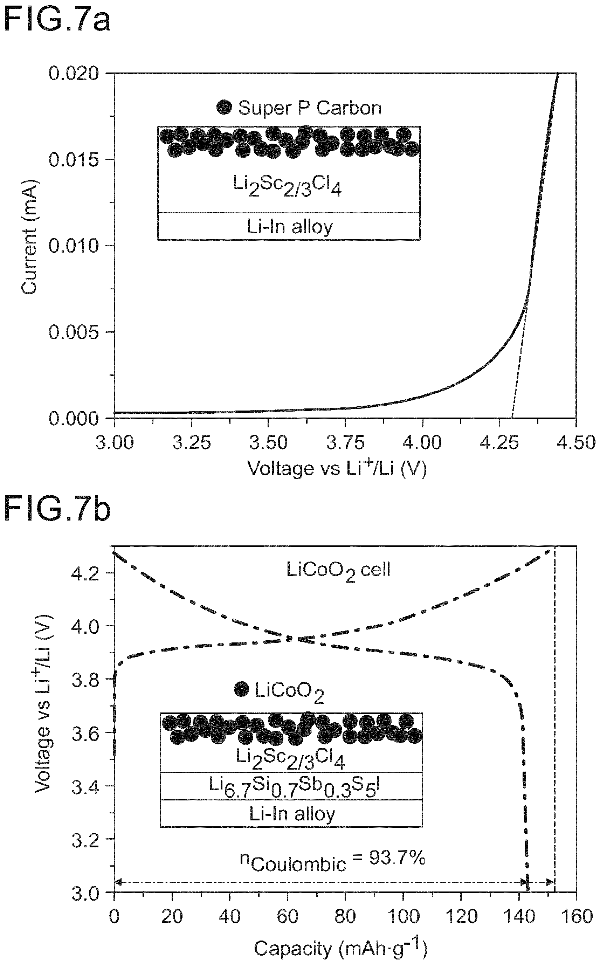

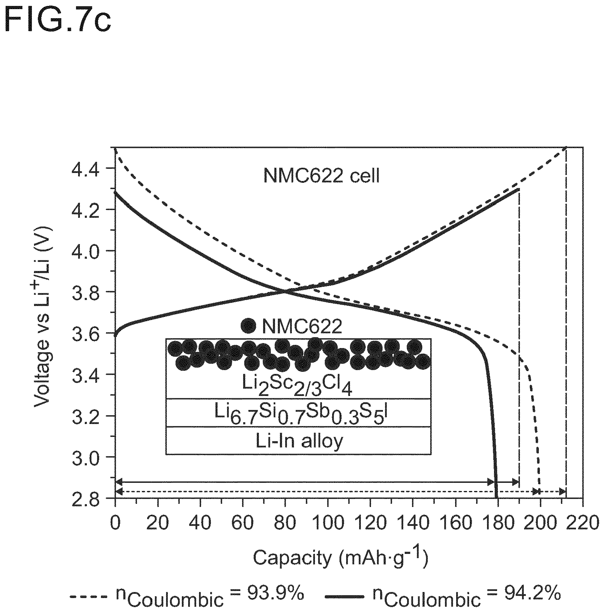

ASSBs prepared as described above having a cathode comprising $LiCoO_2$ are herein referred to as "LCO ASSB", and ASSBs prepared as described above having a cathode comprising NMC622 as "NMC622 ASSB", and ASSBs prepared as described above having a cathode comprising NMC85 as "NMC85 ASSB". Schemes of the cell configurations "LCO ASSB" and "NMC622 ASSB" are shown in the insets of figs. 7b and 7c.

The oxidative stability voltage window of $Li_2Sc_{2/3}Cl_4$ was probed by linear sweep voltammetry (LSV). Fig. 7a shows a linear sweep voltammogram at a scan rate of $0.01 \text{ mV·s}^{-1}$ of a cell with Li-In alloy as the reference, $Li_2Sc_{2/3}Cl_4$/carbon mixture (70:30wt%) as the counter electrode and $Li_2Sc_{2/3}Cl_4$ as the solid electrolyte layer (see configuration scheme in the inset of fig. 7a). Fig. 7a demonstrates that $Li_2Sc_{2/3}Cl_4$ has an oxidative stability of -4.3 V vs Li+/Li, which is significantly higherthan the oxidative stability of state of the art sulfide based solid electrolytes.

Figs. 7b,c show initial charge/discharge curves of bulk-type ASSBs having a cathode comprising $LiCoO_2$ ("LCO ASSB", fig. 7b) cycled between 3V and 4.3V vs $Li^+$/Li and having a cathode comprising NMC622 ("NMC622 ASSB", fig. 7c) cycled between 2.8V and 4.3V and between 2.8V and 4.5V vs $Li^+$/Li at room temperature at 0.1 C. The insets in Fig. 7b, c show schemes of the cell configurations. The anode is in each case a Li-In alloy. The separator is formed of $Li_{6.7}Si_{0.7}Sb_{0.3}S_5I$ (a state of the art sulfide-based electrolyte). The cathode active material is covered by $Li_2Sc_{2/3}Cl_4$, so that direct contact between the cathode active material and the sulfide-based solid electrolyte of the separator is prevented.

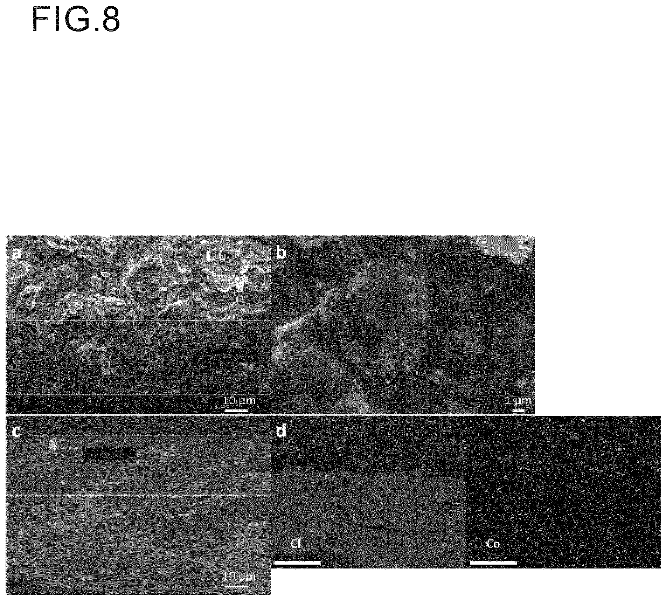

Fig. 8a shows cross-sectional SEM images of the $NMC622/Li_2Sc_{2/3}Cl_4$ cathode composite and $Li_2Sc_{2/3}Cl_4$ electrolyte section of the NMC622 ASSB (schematically shown in the inset of fig. 7c) after cycling (fully discharged state). Fig. 8b shows an enlarged section of the cathode composite of the NMC622 ASSB, showing that the NMC622 particles (spheres) are well embedded in the $Li_2Sc_{2/3}Cl_4$ matrix, providing for excellent contact between NMC622 and $Li_2Sc_{2/3}Cl_4$.

Fig. 8c show SEM cross-sectional images and fig. 8d shows EDX mapping of the $LiCoO_2$ cathode composite of the LCO ASSB (schematically shown in the inset of fig. 7b) after cycling, illustrating that the LCO cannot be distinguished from the solid electrolyte $Li_2Sc_{2/3}Cl_4$. The EDX mapping in fig. 8d (Cl and Co) shows the LCO particles and $Li_2Sc_{2/3}Cl_4$ are well mixed. Thus, fig. 8 shows that the NMC622 and LCO particles are well embedded in the $Li_2Sc_{2/3}Cl_4$ matrix with excellent contact which explains the excellent cycling performance (see below).

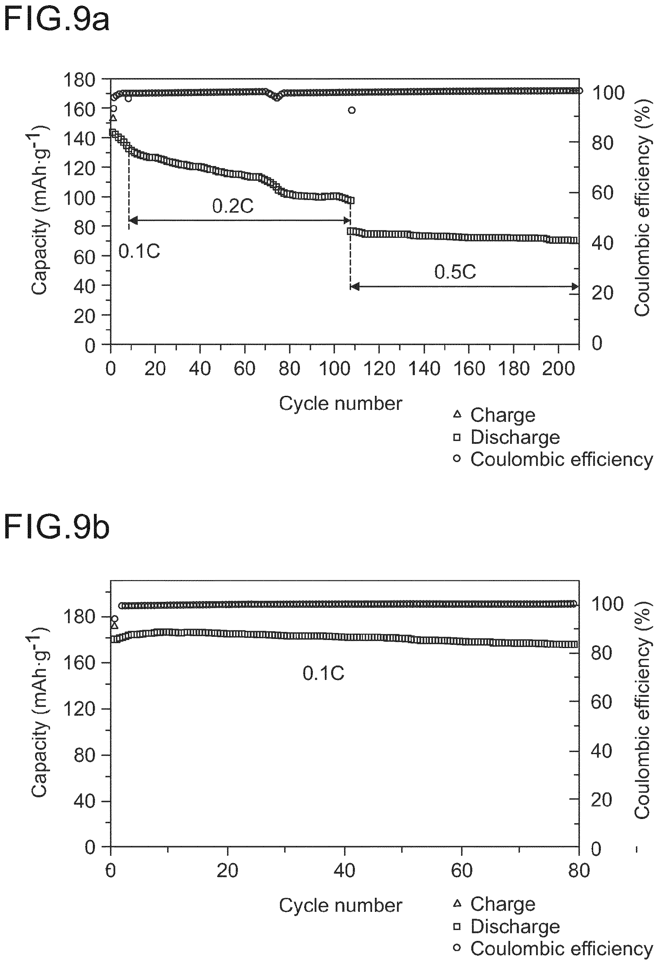

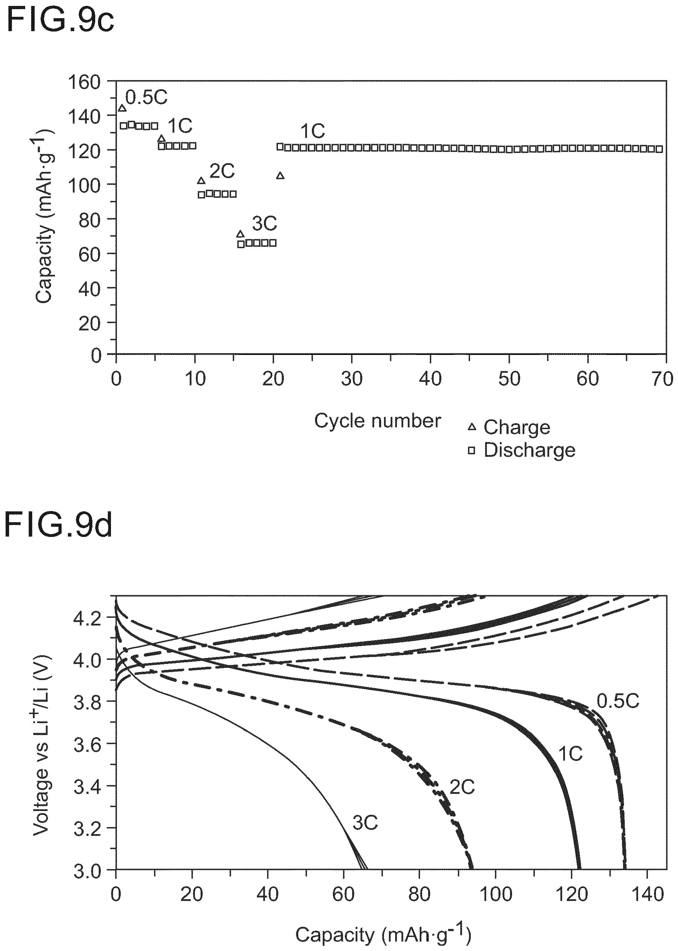

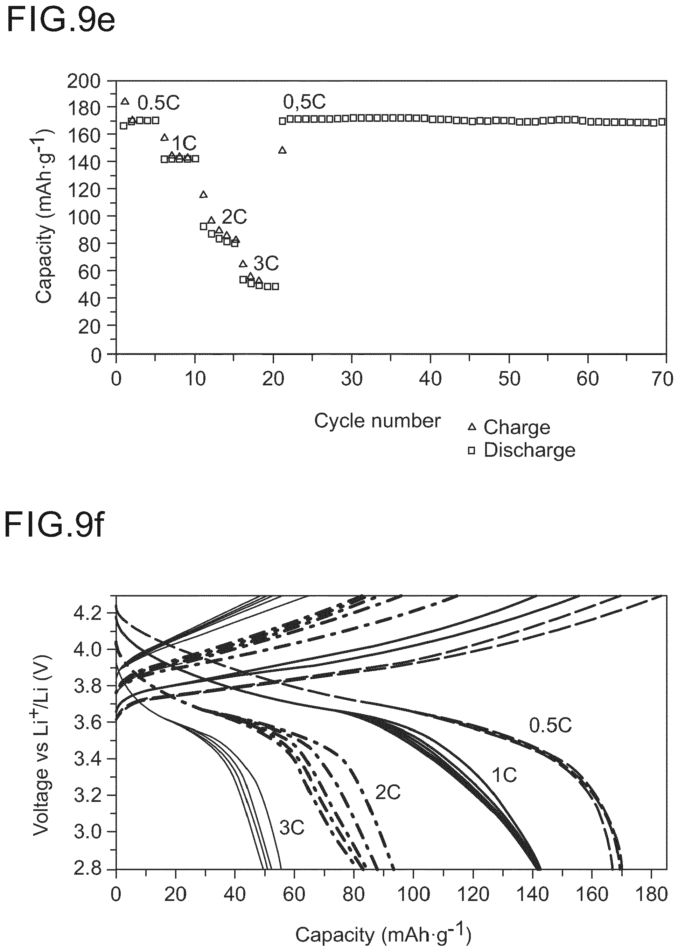

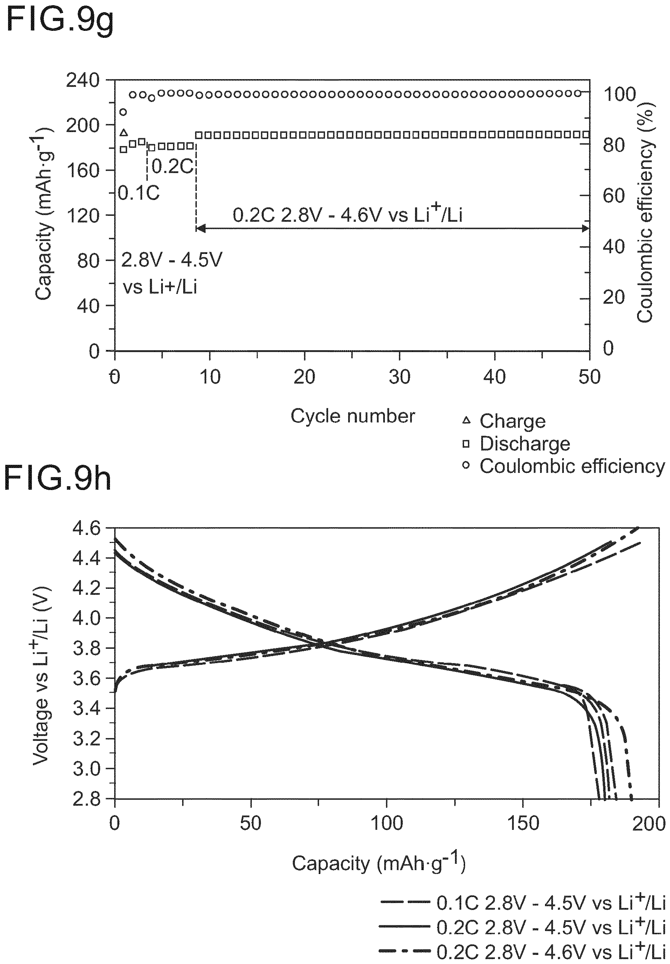

Fig. 9 shows electrochemical performance of "LCO ASSB" resp. "NMC622 ASSB" and in each case $Li_2Sc_{2/3}Cl_4$ as the solid electrolyte at room temperature. In detail, fig. 9 shows the charge-discharge capacity and the Coulombic efficiency (CE) as a function of cycle number for (a) the LCO ASSB cycled at 0.1C, 0.2C and 0.5C between 3.0V and 4.3V vs $Li^+$/Li and (b) the NMC622 ASSB cycled at 0.1C between 2.8 V and 4.3V vs $Li^+$/Li, the charge-discharge capacity as a function of cycle number at different C-rates for (c) the LCO ASSB and (e) the NMC622 ASSB and corresponding charge-discharge curves at different C-rates for (d) the LCO ASSB and (f) the NMC622 ASSB, and (g) the charge-discharge capacity and the Coulombic efficiency (CE) as a function of cycle number for NMC622 ASSB cycled at 0.1C, 0.2C between 2.8V and 4.5V and 4.6V vs $Li^+$/Li and (h) corresponding charge-discharge curves. For further details of fig. 9, see below.

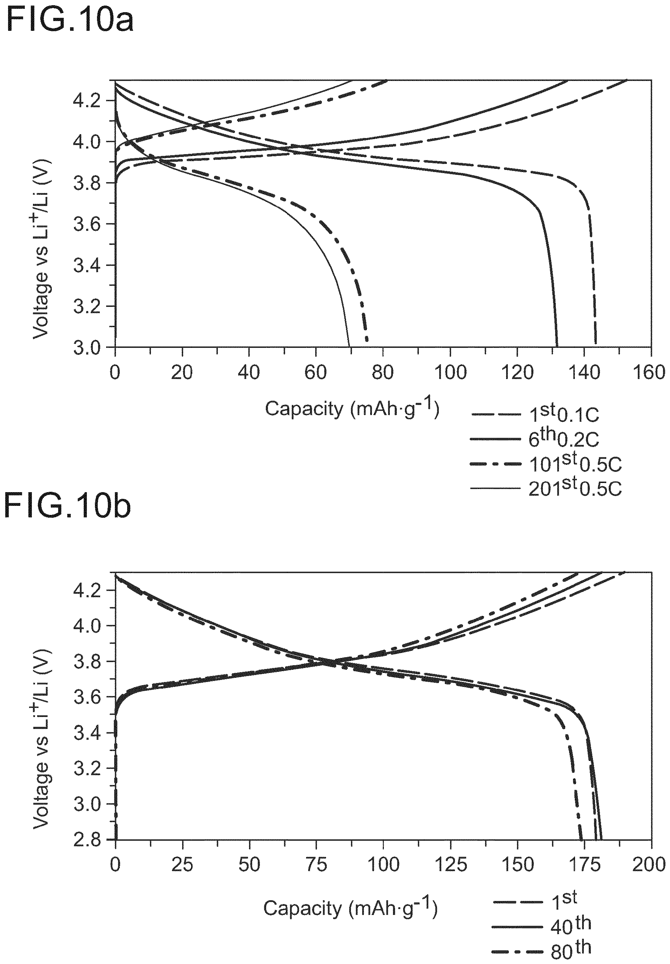

Fig. 10 shows charge-discharge curves of (a) the LCO ASSB cycled at 0.1C, 0.2C and 0.5C and (b) the NMC622 ASSB cycled at 0.1C (1st, 40th and 80th cycles are shown here).

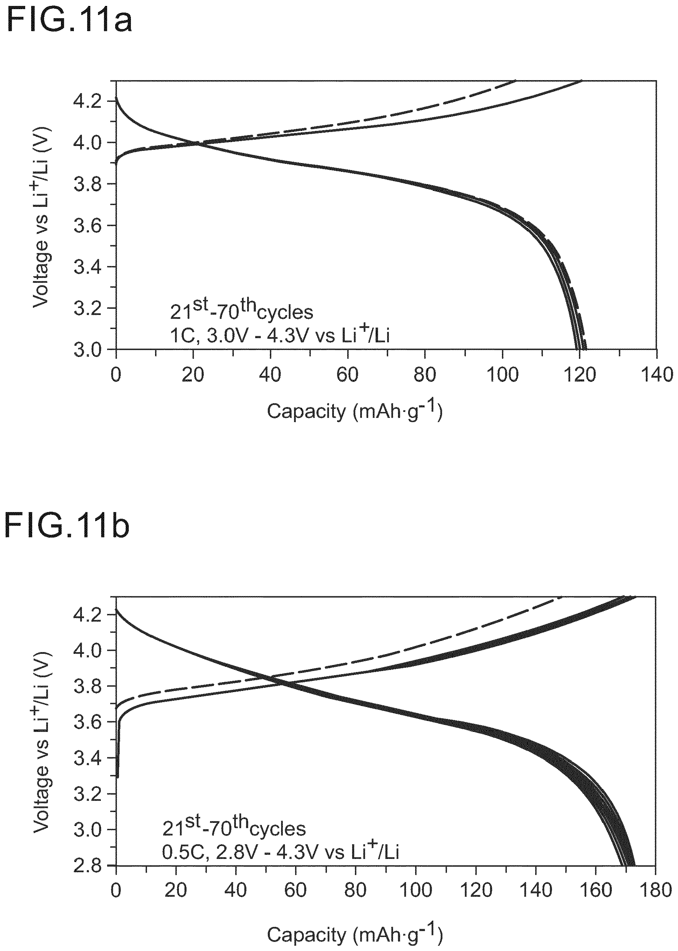

Fig. 11 shows 21st-70th cycles charge-discharge curves of rate cycling for (a) the LCO ASSB cycled at 1C and (b) the NMC622 ASSB cycled at 0.5C.

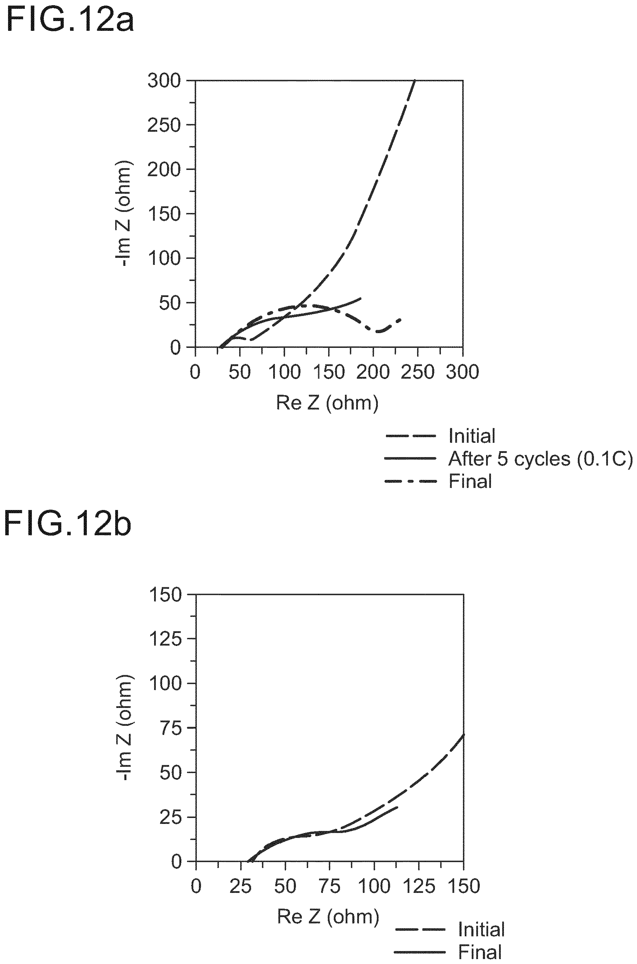

Fig. 12 shows Nyquist plots of a LCO ASSB cycled at (a) slow rates (long-term cycling) and (b) fast rates (rate cycling).

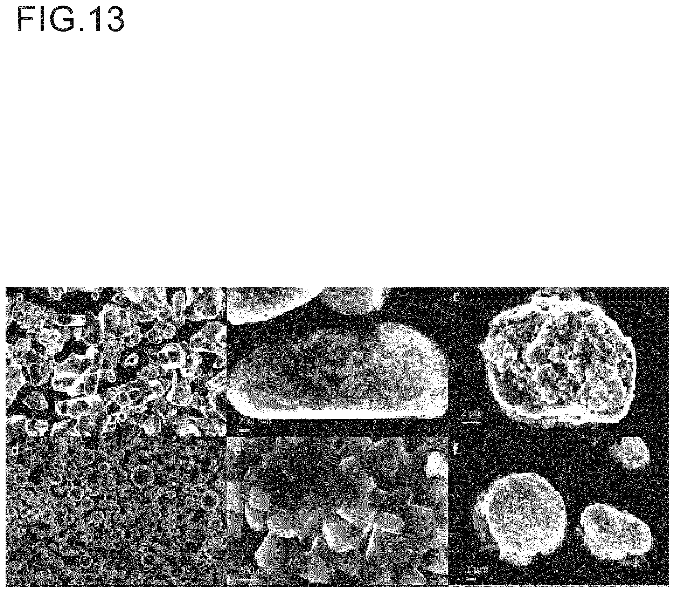

Material morphologies and elemental analysis studies were examined using a Zeiss field emission scanning electron microscope (SEM) equipped with an energy dispersive X-ray spectroscopy detector (EDX). Fig. 13 presents SEM images of pristine (a,b) LCO particles and (d,e) NMC622 particles showing the particle size distribution and microstructure, and SEM images (c,f) of the particle morphology after hand-grinding with 20 wt% $Li_2Sc_{2/3}Cl_4$ showing that the particle surfaces of (c) LCO resp. (f) NMC622 are covered with the $Li_2Sc_{2/3}Cl_4$ solid electrolyte.

Bulk-type all solid state batteries (ASSBs) having a high voltage cathode active material ($LiCoO_2$ resp. NMC622) in direct contact with $Li_2Sc_{2/3}Cl_4$ which prevents direct contact between the cathode active material and the sulfide-based solid electrolyte of the separator, show good performance in terms of Coulombic efficiency and cycling performance. The initial charge/discharge curves of LCO ASSB and NMC622 ASSB cycled in different voltage ranges are shown in Figs. 7 b,c. All ASSBs exhibit high initial Coulombic efficiency above 93.7%. Even for the NMC622 ASSB cycled between 2.8 V and 4.5 V vs $Li^+/Li$, there is still a high initial Coulombic efficiency of 93.9%, which indicates that $Li_2Sc_{2/3}Cl_4$ is stable with these high voltage cathode materials.

The long-term cycling performance of LCO ASSB at rates of 0.1 C, 0.2 C and 0.5 C and room temperature are shown in figs. 9a and 10a. With an upper cutoff voltage of 4.3 V vs $Li^+/Li$, the LCO ASSB exhibits a high initial discharge capacity of 143 $mAh \cdot g^{-1}$ at 0.1 C (fig. 10a) and 135 mAh $g^{-1}$ at 0.5 C (fig. 9d) and good capacity retention. The LCO ASSB also exhibits excellent rate capacity as shown in figs. 9 c,d. Even at 1 C, the LCO ASSB still retains a reversible capacity over 120 $mAh \cdot g^{-1}$ (fig. 11a), which is significantly better than those of state-of-art $LiCoO_2$ ASSBs (not containing $Li_2Sc_{2/3}Cl_4$). The LCO ASSB cycled at faster C-rates ($\geq$ 0.5 C) exhibits significantly better stable capacity retention compared to cycling at a slower rate of 0.1 C or 0.2 C, which suggests possible Co diffusion to the surface of $LiCoO_2$ at slow rate cycling.

Fig. 12 shows the initial and final EIS data of the corresponding LCO ASSBs of Figs. 9a and 9c. The total impedance of the ASSB cycled at fast-rates is almost the same as the initial state (Fig. 12b), but the total impedance clearly increases after cycling at slow-rates (Fig. 12a).

Figs 9b and 10b shows the long-term cycling of the NMC622 ASSB at 0.1 C between 2.8 V and 4.3 V vs $Li^+/Li$. It exhibits very stable capacity retention with virtually no capacity fade, maintaining a capacity of ~175 $mAh \cdot g^{-1}$ with high Coulombic efficiency ~ 99.8% on average over 80 cycles (cycling still in progress). The NMC622 ASSB also exhibits good rate capacity (Figs. 9 e,.f and 11b), although not as promising as the LCO ASSB, possibly due to the microstructure of NMC622 particles with randomly oriented grains (i.e., small primary particles aggregated into large secondary particles). In comparison, LCO is comprised of large single $LiCoO_2$ crystallites (Fig. 13). Tuning cathode particle size and microstructure will potentially further improve the electrochemical performance.

The NMC622 ASSB also exhibits excellent cycling performance with a cutoff voltage of 4.6 V (vs. $Li^+/Li$) with nearly no capacity fade, maintaining a capacity of ~190 $mAh \cdot g^{-1}$ with high Coulombic efficiency ~ 99.5% on average at 0.2 C over 50 cycles (Fig. 9g); typical voltage profiles are shown in Fig. 9h, which are also significantly better than those previously reported for ASSBs with an NMC cathode.

Since linear sweep voltammetry (fig. 7a) shows that the oxidative stability of $Li_2Sc_{2/3}Cl_4$ is ~ 4.3 V vs $Li^+/Li$, a stable interface should form between NMC622 and $Li_2Sc_{2/3}Cl_4$ for NMC622 ASSBs charged to 4.6 V, as proved by stable cycling with no significant increase of overpotential (fig. 10b).

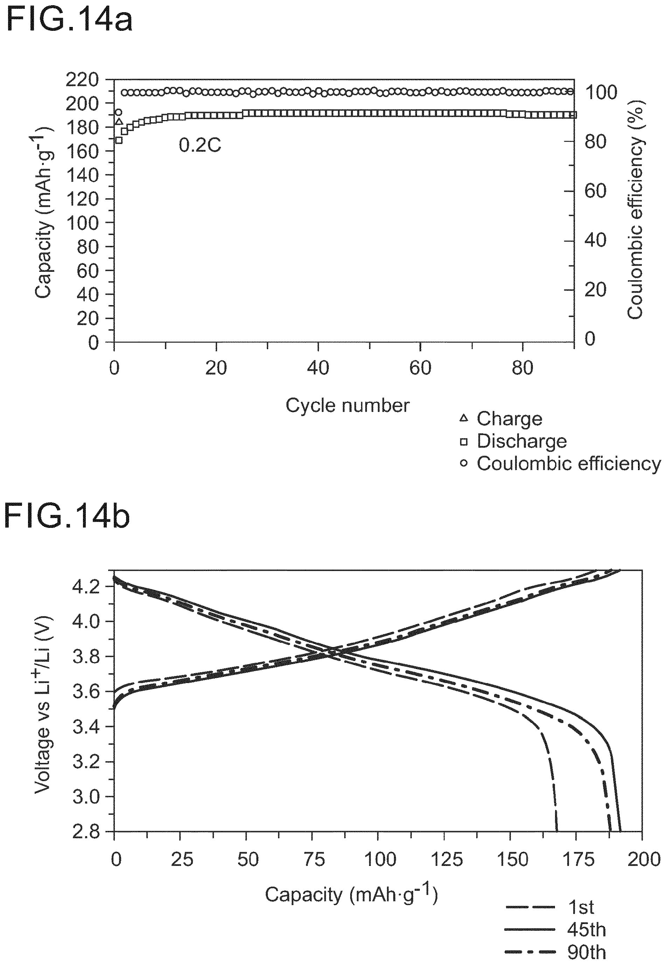

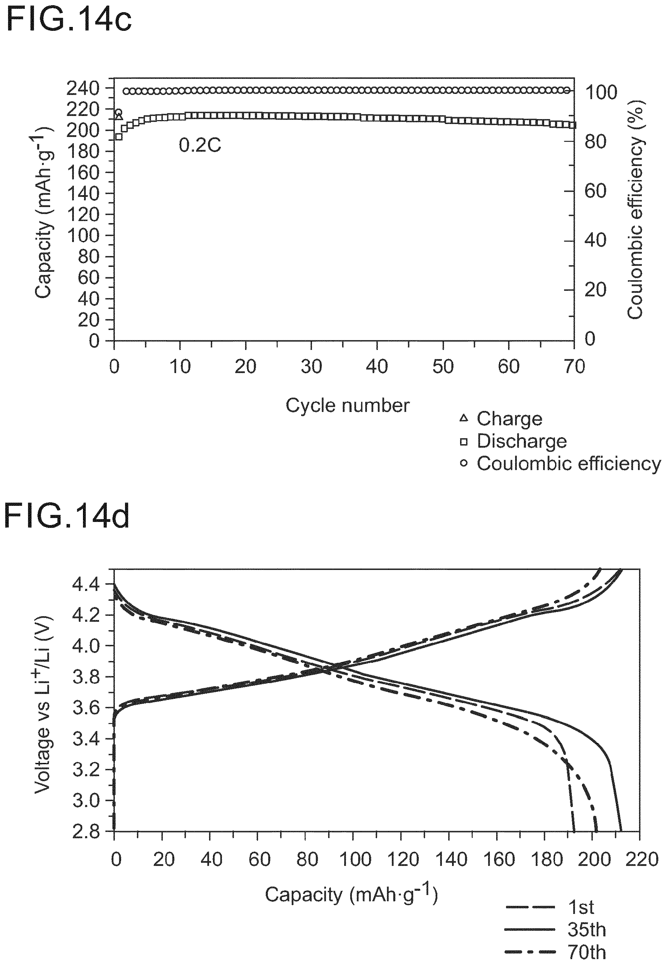

A cathode active material having a higher content of Ni ($LiNi_{0.85}Mn_{0.1}Co_{0.05}O_2$, NMC85) provides higher capacity, thus allowing for a higher energy density. However, such cathode active materials generally are known to exhibit poor stability. Surprisingly, NMC85 ASSBs exhibit stable cycling, as shown in Fig. 14. With an upper cutoff voltage (fig. 14 a,b) of 4.3 V vs $Li^+/Li$, the NMC85 ASSB exhibits a stable discharge capacity >190 $mAh \cdot g^{-1}$ at 0.2C and good capacity retention for 90 cycles. A NMC85 ASSB cycled with high upper cutoff voltage of 4.5 V (fig. 14 c,d) also exhibits stable cycling with high discharge capacity up to 214 $mAh \cdot g^{-1}$ at 0.2C and good capacity retention for 70 cycles. Typically, NMC85 cell with liquid electrolyte show fast capacity fade when charged only to 4.3 V, which is due to the surface of NMC85 particles converted to spinel and rock-salt types phases and solid electrolyte interface formed due to the oxidation of liquid electrolyte by the strongly oxidizing $Ni^{3+/4+}$ sites which impedes the Li ion diffusion. The excellent cycling of NMC85 ASSBs is possible due to the high oxidative stability of $Li_2Sc_{2/3}Cl_4$, as no Li ion blocking interface will be build up between NMC85 and $Li_2Sc_{2/3}Cl_4$. The intrinsic nature of unstable layer structure for NMC cathode active materials having a high Ni content (like NMC 85) and micro-cracks formed in cycled NMC particles due to volume change during cycling (loss of contact) potentially lead to the slow capacity fading in NMC ASSBs, as shown in figs. 9, 10b and 14.

The results presented here show that in an all-solid state battery (ASSBs) $Li_2Sc_{2/3}Cl_4$ can be applied as a high voltage cathode coating material so that the coated cathode materials can be used in combination with lower-cost sulfide solid electrolytes as separators.

The other solid materials listed in table 1 exhibit a similar electrochemical behavior.

## Claims

1. Solid material having a spinel structure and a composition according to general formula (I)

$$Li_aAX_4 \qquad (I)$$

wherein
X is selected from the group consisting of Cl, F, Br and I

(a) A is $M1_bM2_c$
wherein M1 is a first trivalent metal and M2 is a second trivalent metal different from M1

$$0.1 \leq b \leq 0.8$$

$$0 \leq c \leq 0.7$$

$$0.6 \leq (b+c) \leq 0.8$$

$$a = 4 - 3(b+c)$$

(b) A is $M1_dM3_e$
wherein M1 is a trivalent metal and M3 is a divalent metal

$$0.3 \leq d \leq 0.8$$

$$0.2 \leq e \leq 0.7$$

$$0.9 \leq (d+e) \leq 1.1$$

$$a = 4 - 3d - 2e.$$

2. Solid material according to claim 1 having a composition according to general formula (Ia)

$$Li_aM1_bM2_cX_4 \qquad (Ia)$$

wherein

$$0.6 \leq b \leq 0.8$$

$$c = 0$$

$$a = 4\text{-}3b.$$

M1 is a trivalent metal selected from the group consisting of Sc, Al, In and Y.

3. Solid material according to claim 1 having a composition according to general formula (Ia)

$$Li_aM1_bM2_cX_4 \qquad (Ia)$$

wherein

$$0.1 \leq b \leq 0.7$$

$$0.1 \leq c \leq 0.7$$

$$0.6 \leq (b+c) \leq 0.8$$

$$a = 4-3(b+c).$$

M1 and M3 are different trivalent metal selected from the group consisting of Sc, Al, In and Y.

4. Solid material according to claim 1 having a composition according to general formula (Ib)

$$Li_aM1_dM3_eX_4 \qquad (Ib)$$

wherein

M1 is a trivalent metal selected from the group consisting of Sc, Al, In and Y and
M3 is a divalent metal selected from the group consisting of Mg, Ca and Zn

$$0.3 \leq d \leq 0.8$$

$$0.2 \leq e \leq 0.7$$

$$0.9 \leq (d+e) \leq 1.1$$

$$a = 4 - 3d - 2e.$$

5. Solid material according to any of claims 1 to 4, wherein X is Cl.

6. Process for preparing a solid material according to any of claims 1 to 5, said process comprising the steps of

a) preparing or providing a reaction mixture comprising the precursors

(1) LiX
(2) a compound $M1X_3$ wherein M1 is a trivalent metal and optionally
(3) a compound selected from the group consisting of compounds $M2X_3$ wherein M2 is a trivalent metal different from M1 and compounds $M3X_2$ wherein M3 is a divalent metal
wherein in each precursor, independently from the other precursors, X is selected from the group consisting of Cl, F, Br, I
wherein in said reaction mixture the molar ratio of the elements Li, M1, X resp. Li, M1, X and one of M2 and M3 matches general formula (I);

b) heat-treating the reaction mixture in a temperature range of from 300 °C to 700 °C for a total duration of from 30 hours to 100 hours so that a reaction product is formed, and cooling the obtained reaction product so that a solid material having a composition according to general formula (I) is obtained.

7. Process according to claim 6 wherein

(i) the reaction mixture consists of precursors (1) and (2)

wherein precursor (2) is a compound $M1X_3$ wherein M1 is a trivalent metal selected from the group consisting of Sc, Al, In and Y
wherein in said reaction mixture the molar ratio of the elements Li, M1 and X matches general formula (I)

or
(ii) the reaction mixture consists of precursors (1) and (2) and (3), wherein precursor (3) consists of

a compound M2X$_3$ wherein M2 is a trivalent metal selected from the group consisting of Sc, Al, In and Y with the proviso that M2 is different from M1

or

a compound M3X$_2$ wherein M3 is a divalent metal selected from the group consisting of Mg, Ca and Zn, wherein in said reaction mixture the molar ratio of the elements Li, M1, X and M2 resp. M3 matches general formula (I).

8. Use of a solid material according to any of claims 1 to 5 as a solid electrolyte for an electrochemical cell, wherein preferably the solid electrolyte is a component of a solid structure for an electrochemical cell selected from the group consisting of cathode, anode and separator.

9. Solid structure for an electrochemical cell, wherein said solid structure is selected from the group consisting of cathode, anode and separator, wherein said solid structure comprises a solid material according to any of claims 1 to 5.

10. Solid structure according to claim 9, wherein said solid structure is a cathode comprising a mixture comprising

- a cathode active material and
- a solid material according to any of claims 1 to 5
- and one or more selected from the group consisting of electron conducting materials and binding agents.

11. Solid structure according to claim 10, wherein said cathode active material is selected from the group consisting of materials having a composition according to general formula (II)

$$Li_{1+t}[Co_xMn_yNi_zM_u]_{1-t}O_2 \qquad (II)$$

wherein

$$0 \leq x \leq 1$$

$$0 \leq y \leq 1$$

$$0 \leq z \leq 1$$

$$0 \leq u \leq 0.15$$

M is one or more elements selected from the group consisting of Al, Mg, Ba, B, and transition metals other than Ni, Co, and Mn,

$$x + y + z + u = 1$$

$$-0.05 \leq t \leq 0.2$$

wherein the cathode active material according to general formula (II) contains at least one of Ni and Mn.

12. Electrochemical cell comprising a solid material according to any of claims 1 to 5 or a solid structure as defined in any of claims 9 to 11.

13. Electrochemical cell according to claim 12 comprising

- a cathode comprising a cathode active material coated with or covered by or embedded in a solid material according to any of claims 1 to 5
- a lithium ion conducting layer which does not comprise a solid material according to formula (I)

- an anode.

**14.** Electrochemical cell according to claim 13, wherein

(a) a layer comprising a solid material according to any of claims 1 to 5 is sandwiched between and is in direct contact with
(b) a layer comprising a cathode active material
(c) a lithium ion conducting layer which does not comprise a solid material according to formula (I), said lithium ion conducting layer (c) being in direct contact with an anode comprising lithium metal or a metal alloy comprising lithium.

**15.** Electrochemical cell according to claim 13 or 14, wherein said lithium ion conducting layer which does not comprise a solid material according to formula (I) comprises one or more of lithium containing sulfides, lithium containing oxysulfides, lithium-containing oxyphosphates and lithium containing oxyphosphonitrides.

**Patentansprüche**

**1.** Festes Material mit Spinellstruktur und einer Zusammensetzung gemäß der allgemeinen Formel (I)

$$Li_aAX_4 \qquad (I),$$

wobei
X aus der Gruppe bestehend aus Cl, F, Br und I ausgewählt ist,

(a) A für $M1_bM2_c$ steht,
wobei M1 für ein erstes dreiwertiges Metall steht und M2 für ein zweites dreiwertiges Metall, das von M1 verschieden ist, steht,

$$0{,}1 \leq b \leq 0{,}8$$

$$0 \leq c \leq 0{,}7$$

$$0{,}6 \leq (b+c) \leq 0{,}8$$

$$a = 4 - 3(b+c),$$

(b) A für $M1_dM3_e$ steht,
wobei M1 für ein dreiwertiges Metall steht und M3 für ein zweiwertiges Metall steht,

$$0{,}3 \leq d \leq 0{,}8$$

$$0{,}2 \leq e \leq 0{,}7$$

$$0{,}9 \leq (d+e)\ 1{,}1$$

$$a = 4 - 3d - 2e.$$

**2.** Festes Material nach Anspruch 1 mit einer Zusammensetzung gemäß der allgemeinen Formel (Ia)

$$Li_aM1_bM2_cX_4 \qquad (Ia),$$

wobei

$$0,6 \leq b \leq 0,8$$

$$c = 0$$

$$a = 4 - 3b,$$

M1 für ein dreiwertiges Metall steht, das aus der Gruppe bestehend aus Sc, Al, In und Y ausgewählt ist.

**3.** Festes Material nach Anspruch 1 mit einer Zusammensetzung gemäß der allgemeinen Formel (Ia)

$$Li_aM1_bM2_cX_4 \qquad (Ia),$$

wobei

$$0,1 \leq b \leq 0,7$$

$$0,1 \leq c \leq 0,7$$

$$0,6 \leq (b+c) \leq 0,8$$

$$a = 4 - 3(b+c),$$

M1 und M3 für verschiedene dreiwertige Metalle stehen, die aus der Gruppe bestehend aus Sc, Al, In und Y ausgewählt sind.

**4.** Festes Material nach Anspruch 1 mit einer Zusammensetzung gemäß der allgemeinen Formel (Ib)

$$Li_aM1_dM3_eX_4 \qquad (Ib),$$

wobei

M1 für ein dreiwertiges Metall steht, das aus der Gruppe bestehend aus Sc, Al, In und Y ausgewählt ist und M3 für ein zweiwertiges Metall steht, das aus der Gruppe bestehend aus Mg, Ca und Zn ausgewählt ist,

$$0,3 \leq d \leq 0,8$$

$$0,2 \leq e \leq 0,7$$

$$0,9 \leq (d+e) \; 1,1$$

$$a = 4 - 3d - 2e.$$

**5.** Festes Material nach einem der Ansprüche 1 bis 4, wobei X für Cl steht.

**6.** Verfahren zur Herstellung eines festen Materials nach einem der Ansprüche 1 bis 5, wobei das Verfahren die folgenden Schritte umfasst:

a) Herstellen oder Bereitstellen einer Reaktionsmischung, umfassend die Vorläufer

(1) LiX
(2) eine Verbindung $M1X_3$, wobei M1 für ein dreiwertiges Metall steht,
und gegebenenfalls
(3) eine Verbindung, die aus der Gruppe bestehend aus Verbindungen $M2X_3$, wobei M2 für ein dreiwertiges Metall, das von M1 verschieden ist, steht, und Verbindungen $M3X_2$, wobei M3 für ein zweiwertiges Metall steht, ausgewählt ist,
wobei in jedem Vorläufer unabhängig von den anderen Vorläufern X aus der Gruppe bestehend aus Cl, F, Br, I ausgewählt ist,
wobei in der Reaktionsmischung das Molverhältnis der Elemente Li, M1, X bzw. Li, M1, X und einem von M2 und M3 der allgemeinen Formel (I) entspricht;

b) Wärmebehandeln der Reaktionsmischung in einem Temperaturbereich von 300 °C bis 700 °C über eine Gesamtdauer von 30 Stunden bis 100 Stunden, so dass ein Reaktionsprodukt gebildet wird, und Abkühlen des erhaltenen Reaktionsprodukts, so dass ein festes Material mit einer Zusammensetzung gemäß der allgemeinen Formel (I) erhalten wird.

**7.** Verfahren nach Anspruch 6, wobei

(i) die Reaktionsmischung aus Vorläufern (1) und (2) besteht,

wobei es sich bei Vorläufer (2) um eine Verbindung $M1X_3$ handelt, in der M1 für ein dreiwertiges Metall steht, das aus der Gruppe bestehend aus Sc, Al, In und Y ausgewählt ist,
wobei in der Reaktionsmischung das Molverhältnis der Elemente Li, M1 und X der allgemeinen Formel (I) entspricht,

oder
(ii) die Reaktionsmischung aus Vorläufern (1) und (2) und (3) besteht, wobei Vorläufer (3) aus

einer Verbindung $M2X_3$, in der M2 für ein dreiwertiges Metall steht, das aus der Gruppe bestehend aus Sc, Al, In und Y ausgewählt ist, mit der Maßgabe, dass M2 von M1 verschieden ist,
oder
einer Verbindung $M3X_2$, in der M3 für ein zweiwertiges Metall steht, das aus der Gruppe bestehend aus Mg, Ca und Zn ausgewählt ist, besteht,
wobei in der Reaktionsmischung das Molverhältnis der Elemente Li, M1, X und M2 bzw. M3 der allgemeinen Formel (I) entspricht.

**8.** Verwendung eines festen Materials nach einem der Ansprüche 1 bis 5 als Festelektrolyt für eine elektrochemische Zelle, wobei es sich bei dem Festelektrolyt vorzugsweise um eine Komponente einer festen Struktur für eine elektrochemische Zelle, die aus der Gruppe bestehend aus Kathode, Anode und Separator ausgewählt ist, handelt.

**9.** Feste Struktur für eine elektrochemische Zelle, wobei die feste Struktur aus der Gruppe bestehend aus Kathode, Anode und Separator ausgewählt ist, wobei die feste Struktur ein festes Material nach einem der Ansprüche 1 bis 5 umfasst.

**10.** Feste Struktur nach Anspruch 9, wobei es sich bei der festen Struktur um eine Kathode handelt, die eine Mischung umfasst, die

- ein Kathodenaktivmaterial und
- ein festes Material nach einem der Ansprüche 1 bis 5
- und eines oder mehrere aus der Gruppe bestehend aus elektronenleitenden Materialien und Bindemitteln

umfasst.

**11.** Feste Struktur nach Anspruch 10, wobei das Kathodenaktivmaterial aus der Gruppe bestehend aus Materialien mit einer Zusammensetzung gemäß der allgemeinen Formel (II) ausgewählt ist:

$$Li_{1+t}[Co_xMn_yNi_zM_u]_{1-t}O_2 \qquad (II),$$

wobei

$$0 \leq x \leq 1$$

$$0 \leq y \leq 1$$

$$0 \leq z \leq 1$$

$$0 \leq u \leq 0{,}15$$

M für ein oder mehrere Elemente steht, die aus der Gruppe bestehend aus Al, Mg, Ba, B und Übergangsmetallen, die von Ni, Co und Mn verschieden sind, ausgewählt sind,

$$x + y + z + u = 1$$

$$-0{,}05 \leq t \leq 0{,}2,$$

wobei das Kathodenaktivmaterial gemäß der allgemeinen Formel (II) mindestens eines von Ni und Mn enthält.

**12.** Elektrochemische Zelle, umfassend ein festes Material nach einem der Ansprüche 1 bis 5 oder eine feste Struktur gemäß einem der Ansprüche 9 bis 11.

**13.** Elektrochemische Zelle nach Anspruch 12, umfassend

- eine Kathode, die ein mit einem festen Material nach einem der Ansprüche 1 bis 5 beschichtetes oder bedecktes oder in einem festen Material nach einem der Ansprüche 1 bis 5 eingebettete Kathodenaktivmaterial umfasst,
- eine lithiumionenleitende Schicht, die kein festes Material gemäß Formel (I) umfasst,
- eine Anode.

**14.** Elektrochemische Zelle nach Anspruch 13, wobei

(a) eine Schicht, die ein festes Material nach einem der Ansprüche 1 bis 5 umfasst, sandwichartig zwischen
(b) einer Schicht, die ein Kathodenaktivmaterial umfasst,
(c) einer lithiumionenleitenden Schicht, die kein festes Material gemäß Formel (I) umfasst,

angeordnet ist und in direktem Kontakt damit steht, wobei die lithiumionenleitende Schicht (c) in direktem Kontakt mit einer Anode, die Lithiummetall oder eine lithiumhaltige Metalllegierung umfasst, steht.

**15.** Elektrochemische Zelle nach Anspruch 13 oder 14, wobei die lithiumionenleitende Schicht, die kein festes Material gemäß Formel (I) umfasst, lithiumhaltige Sulfide, lithiumhaltige Oxysulfide, lithiumhaltige Oxyphosphate und/oder lithiumhaltige Oxyphosphonitride umfasst.

**Revendications**

1.  Matériau solide ayant une structure de spinelle et une composition selon la formule générale (I)

    **Li$_a$AX$_4$**          **(I)**

    X étant choisi dans le groupe constitué par Cl, F, Br et I

    (a) A étant **M1bM2c**
    M1 étant un premier métal trivalent et M2 étant un deuxième métal trivalent différent de M1

    $$0,1 \leq b \leq 0,8$$

    $$0 \leq c \leq 0,7$$

    $$0,6 \leq (b + c) \leq 0,8$$

    $$a = 4 - 3(b + c),$$

    (b) A étant **M1$_d$M3$_e$**
    M1 étant un métal trivalent et M3 étant un métal divalent

    $$0,3 \leq d \leq 0,8$$

    $$0,2 \leq e \leq 0,7$$

    $$0,9 \leq (d + e) \leq 1,1$$

    $$a = 4 - 3d - 2e.$$

2.  Matériau solide selon la revendication 1 ayant une composition selon la formule générale (Ia)

    **Li$_a$M1$_b$M2$_c$X$_4$**          **(Ia)**

    $$0,6 \leq b \leq 0,8$$

    $$c = 0$$

    $$a = 4 - 3b,$$

    M1 étant un métal trivalent choisi dans le groupe constitué par Sc, Al, In et Y.

3.  Matériau solide selon la revendication 1 ayant une composition selon la formule générale (Ia)

    **Li$_a$M1$_b$M2$_c$X$_4$**          **(Ia)**

$$0,1 \leq b \leq 0,7$$

$$0,1 \leq c \leq 0,7$$

$$0,6 \leq (b + c) \leq 0,8$$

$$a = 4 - 3(b + c),$$

M1 et M3 étant un métal trivalent différent choisi dans le groupe constitué par Sc, Al, In et Y.

4. Matériau solide selon la revendication 1 ayant une composition selon la formule générale (Ib)

$$Li_aM1_dM3_eX_4 \qquad \text{(Ib)}$$

M1 étant un métal trivalent choisi dans le groupe constitué par Sc, Al, In et Y et
M3 étant un métal divalent choisi dans le groupe constitué par Mg, Ca et Zn

$$0,3 \leq d \leq 0,8$$

$$0,2 \leq e \leq 0,7$$

$$0,9 \leq (d + e) \leq 1,1$$

$$a = 4 - 3d - 2e.$$

5. Matériau solide selon l'une quelconque des revendications 1 à 4, X étant Cl.

6. Procédé pour la préparation d'un matériau solide selon l'une quelconque des revendications 1 à 5, ledit procédé comprenant les étapes de

a) préparation ou fourniture d'un mélange réactionnel comprenant les précurseurs

(1) LiX
(2) un composé $M1X_3$, M1 étant un métal trivalent et éventuellement
(3) un composé choisi dans le groupe constitué par des composés $M2X_3$, M2 étant un métal trivalent différent de M1 et des composés $M3X_2$, M3 étant un métal divalent
dans chaque précurseur, indépendamment des autres précurseurs, X étant choisi dans le groupe constitué par Cl, F, Br, I
dans ledit mélange réactionnel, le rapport molaire des éléments Li, M1, X respectivement Li, M1, X et l'un parmi M2 et M3 correspondant à la formule générale (I) ;

b) traitement thermique du mélange réactionnel dans une plage de température allant de 300 °C à 700 °C pour une durée totale allant de 30 heures à 100 heures de sorte qu'un produit de réaction soit formé, et refroidissement du produit de réaction obtenu de sorte qu'un matériau solide ayant une composition selon la formule générale (I) soit obtenu.

7. Procédé selon la revendication 6,

(i) le mélange réactionnel étant constitué des précurseurs (1) et (2)

le précurseur (2) étant un composé M1X$_3$, M1 étant un métal trivalent choisi dans le groupe constitué par Sc, Al, In et Y

dans ledit mélange réactionnel, le rapport molaire des éléments Li, M1 et X correspondant à la formule générale (I)

ou

(ii) le mélange réactionnel étant constitué des précurseurs (1) et (2) et (3), le précurseur (3) étant constitué

d'un composé M2X$_3$, M2 étant un métal trivalent choisi dans le groupe constitué par Sc, Al, In et Y à la condition que M2 soit différent de M1

ou

d'un composé M3X$_2$, M3 étant un métal divalent choisi dans le groupe constitué par Mg, Ca et Zn, dans ledit mélange réactionnel, le rapport molaire des éléments Li, M1, X et M2 respectivement M3 correspondant à la formule générale (I).

8. Utilisation d'un matériau solide selon l'une quelconque des revendications 1 à 5 en tant qu'électrolyte solide pour une cellule électrochimique, préférablement l'électrolyte solide étant un composant d'une structure solide pour une cellule électrochimique choisie dans le groupe constitué par une cathode, une anode et un séparateur.

9. Structure solide pour une cellule électrochimique, ladite structure solide étant choisie dans le groupe constitué par une cathode, une anode et un séparateur, ladite structure solide comprenant un matériau solide selon l'une quelconque des revendications 1 à 5.

10. Structure solide selon la revendication 9, ladite structure solide étant une cathode comprenant un mélange comprenant

 - un matériau actif de cathode et
 - un matériau solide selon l'une quelconque des revendications 1 à 5
 - et l'un ou plusieurs choisis dans le groupe constitué par des matériaux conducteurs d'électrons et des agents liants.

11. Structure solide selon la revendication 10, ledit matériau actif de cathode étant choisi dans le groupe constitué par des matériaux ayant une composition selon la formule générale (II)

$$Li_{1+t}[Co_xMn_yNi_zM_u]_{1-f}O_2 \qquad (II)$$

$$0 \leq x \leq 1$$

$$0 \leq y \leq 1$$

$$0 \leq z \leq 1$$

$$0 \leq u \leq 0,15$$

M étant un ou plusieurs éléments choisis dans le groupe constitué par Al, Mg, Ba, B et des métaux de transition autres que Ni, Co et Mn,

$$x + y + z + u = 1$$

$$-0,05 \leq t \leq 0,2,$$

le matériau actif de cathode selon la formule générale (II) contenant au moins l'un parmi Ni et Mn.

**12.** Cellule électrochimique comprenant un matériau solide selon l'une quelconque des revendications 1 à 5 ou une structure solide telle que définie dans l'une quelconque des revendications 9 à 11.

**13.** Cellule électrochimique selon la revendication 12 comprenant

- une cathode comprenant un matériau actif de cathode revêtu par ou recouvert par ou incorporé dans un matériau solide selon l'une quelconque des revendications 1 à 5
- une couche conduisant les ions lithium qui ne comprend pas un matériau solide selon la formule (I)
- une anode.

**14.** Cellule électrochimique selon la revendication 13,

(a) une couche comprenant un matériau solide selon l'une quelconque des revendications 1 à 5 étant prise en sandwich entre et étant en contact direct avec
(b) une couche comprenant un matériau actif de cathode
(c) une couche conduisant les ions lithium qui ne comprend pas un matériau solide selon la formule (I), ladite couche conduisant les ions lithium (c) étant en contact direct avec une anode comprenant du lithium métallique ou un alliage métallique comprenant du lithium.

**15.** Cellule électrochimique selon la revendication 13 ou 14, ladite couche conduisant les ions lithium qui ne comprend pas un matériau solide selon la formule (I) comprenant l'un ou plusieurs parmi des sulfures contenant du lithium, des oxysulfures contenant du lithium, des oxyphosphates contenant du lithium et des oxyphosphonitrures contenant du lithium.

## FIG.1a

## FIG.1b

FIG.2

## FIG.3

* LiCl
● monoclinic $Li_3InCl_6$

# FIG.4

## FIG.5

$Li_{1.65}Mg_{0.65}Sc_{0.35}Cl_4$

Intensity (a.u.)

2Θ (°) Cu Kα

● monoclinic $Li_3InCl_6$

# FIG.6

# FIG.7a

Inset diagram labels: Super P Carbon, $Li_2Sc_{2/3}Cl_4$, Li-In alloy

Y-axis: Current (mA)
X-axis: Voltage vs $Li^+$/Li (V)

# FIG.7b

$LiCoO_2$ cell

Inset diagram labels: $LiCoO_2$, $Li_2Sc_{2/3}Cl_4$, $Li_{6.7}Si_{0.7}Sb_{0.3}S_5I$, Li-In alloy

$n_{Coulombic} = 93.7\%$

Y-axis: Voltage vs $Li^+$/Li (V)
X-axis: Capacity (mAh·$g^{-1}$)

# FIG.7c

# FIG.8

## FIG.9a

## FIG.9b

## FIG.9c

## FIG.9d

## FIG.9e

## FIG.9f

# FIG.9g

Charge
Discharge
Coulombic efficiency

# FIG.9h

—— — 0.1C 2.8V - 4.5V vs Li$^+$/Li
——— 0.2C 2.8V - 4.5V vs Li$^+$/Li
—·—·— 0.2C 2.8V - 4.6V vs Li$^+$/Li

## FIG.10a

Capacity (mAh·g⁻¹)

- — — 1ˢᵗ 0.1C
- —— 6ᵗʰ 0.2C
- —··— 101ˢᵗ 0.5C
- —— 201ˢᵗ 0.5C

## FIG.10b

Capacity (mAh·g⁻¹)

- — — 1ˢᵗ
- —— 40ᵗʰ
- —··— 80ᵗʰ

## FIG.11a

21$^{st}$-70$^{th}$cycles
1C, 3.0V - 4.3V vs Li$^+$/Li

## FIG.11b

21$^{st}$-70$^{th}$cycles
0.5C, 2.8V - 4.3V vs Li$^+$/Li

## FIG.12a

- - — Initial
——— After 5 cycles (0.1C)
— - — Final

## FIG.12b

- - — Initial
——— Final

FIG.13

## FIG.14a

△ Charge
□ Discharge
○ Coulombic efficiency

## FIG.14b

——— 1st
——— 45th
—·—· 90th

## FIG.14c

Legend:
- △ Charge
- ▢ Discharge
- ○ Coulombic efficiency

## FIG.14d

Legend:
- 1st
- 35th
- 70th

**EP 4 126 765 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190088995 A1
- WO 2019135343 A1
- WO 2019135345 A1
- US 20170331092 A1

**Non-patent literature cited in the description**

- **LIANG et al.** Site-Occupation-Tuned Superionic LixScCl3+x Halide Solid Electrolytes for All-Solid-State Batteries. *J. Am. Chem. Soc.,* 26 March 2020
- *Supporting Information,* April 2020